(19) Europäisches Patentamt
European Patent Office
Office européen des brevets

(11) EP 3 204 834 B1

(12) EUROPEAN PATENT SPECIFICATION

(45) Date of publication and mention of the grant of the patent:
**22.06.2022 Bulletin 2022/25**

(21) Application number: **15775197.5**

(22) Date of filing: **05.10.2015**

(51) International Patent Classification (IPC):
***B25J 9/06*** (2006.01) ***B25J 9/16*** (2006.01)
***G05D 1/06*** (2006.01)

(52) Cooperative Patent Classification (CPC):
**G05D 1/0692; B25J 9/065;** B25J 9/1625

(86) International application number:
**PCT/EP2015/072923**

(87) International publication number:
**WO 2016/055408 (14.04.2016 Gazette 2016/15)**

# (54) GUIDANCE OF UNDERWATER SNAKE ROBOTS

FÜHRUNG VON UNTERWASSERSCHLANGENROBOTERN

GUIDAGE DE ROBOT SERPENT SOUS-MARIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2014 GB 201417625**

(43) Date of publication of application:
**16.08.2017 Bulletin 2017/33**

(73) Proprietor: **Eelume AS**
**7012 Trondheim (NO)**

(72) Inventors:
- **PETTERSEN, Kristin Ytterstad**
  **N-7052 Trondheim (NO)**
- **LILJEBÄCK, Pål**
  **N-7560 Vikhammer (NO)**
- **KELASIDI, Eleni**
  **N-7035 Nardo, Trondheim (NO)**
- **GRAVDAHL, Jan Tommy**
  **N-7033 Trondheim (NO)**

(74) Representative: **Dehns**
**St. Bride's House**
**10 Salisbury Square**
**London EC4Y 8JD (GB)**

(56) References cited:
- **KELASIDI E ET AL: "A waypoint guidance strategy for underwater snake robots", 22ND MEDITERRANEAN CONFERENCE ON CONTROL AND AUTOMATION, IEEE, 16 June 2014 (2014-06-16), pages 1512-1519, XP032687143, DOI: 10.1109/MED.2014.6961590 ISBN: 978-1-4799-5900-6 [retrieved on 2014-11-18]**
- **KELASIDI E ET AL: "Modeling of underwater snake robots", 2014 IEEE INTERNATIONAL CONFERENCE ON ROBOTICS AND AUTOMATION (ICRA), IEEE, 31 May 2014 (2014-05-31), pages 4540-4547, XP032650570, DOI: 10.1109/ICRA.2014.6907522 [retrieved on 2014-09-22]**
- **ALESSANDRO CRESPI ET AL: "Salamandra Robotica II: An Amphibious Robot to Study Salamander-Like Swimming and Walking Gaits", IEEE TRANSACTIONS ON ROBOTICS, IEEE SERVICE CENTER, PISCATAWAY, NJ, US, vol. 29, no. 2, 30 April 2013 (2013-04-30) , pages 308-320, XP011499208, ISSN: 1552-3098, DOI: 10.1109/TRO.2012.2234311**
- **WALTER CAHARIJA ET AL: "Path following of underactuated autonomous underwater vehicles in the presence of ocean currents", DECISION AND CONTROL (CDC), 2012 IEEE 51ST ANNUAL CONFERENCE ON, IEEE, 10 December 2012 (2012-12-10), pages 528-535, XP032324709, DOI: 10.1109/CDC.2012.6427007 ISBN: 978-1-4673-2065-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 204 834 B1

## Description

The present invention relates to the guidance of underwater snake robots, and in particular to methods and devices for control of underwater snake robots for path following guidance.

For centuries, engineers and scientists have gained inspiration from the natural world in their search for solutions to technical problems, and this process is termed biomimetics. Underwater snake robots have several promising applications for underwater exploration, monitoring, surveillance and inspection. They thus bring a promising prospective to improve the efficiency and manoeuvrability of modern-day underwater vehicles. These mechanisms carry a lot of potential for inspection of subsea oil and gas installations. Also, for the biological community, military applications and marine archaeology, snake robots that are able to swim smoothly without much noise, and that can move in difficult environments such as ship wrecks, are very interesting. To realize operational snake robots for such underwater applications, a number of different control design challenges must first be solved. An important control problem concerns the ability to follow given reference paths under the influence of ocean current effects.

Studies of snake robots have largely restricted themselves to land-based studies, and several models for land-based snake robots have been proposed. Comparing amphibious snake robots to the traditional land-based ones, the former have the advantage of adaptability to aquatic environments. Research on amphibious snake robots (also referred to as lamprey robots or eel-like robots) is, however, much less extensive than for the traditional types and fewer prototypes have been developed. Several results have been reported in the related field of design, modelling and control of underwater robots that mimic the movement of fish. Regarding swimming snake robots, the underlying propulsive force generation mechanism has been studied through exploration of the fluid dynamics surrounding the body. In this field, several mathematical models of underwater snake robots have been proposed.

Several control approaches for underwater snake robots have been proposed in the literature. However, the emphasis so far has mainly been on achieving forward and turning locomotion. The next step would be not only to achieve forward locomotion, but also to make the snake robot follow a desired path, i.e. solving the path following control problem. Previous approaches for path following control are based on dynamic models of the swimming robots where ocean current effects are neglected.

In "Modelling of underwater snake robots" by E. Kelasidi, K. Y. Pettersen, J. T. Gravdahl, and P. Liljeback, in Proc. IEEE International Conference on Robotics and Automation (ICRA), Hong Kong, China, May 31 - June 7 2014, the authors propose a model of underwater snake robots, where the dynamic equations are written in closed form. This modelling approach takes into account the linear and the nonlinear drag forces (resistive fluid forces), the added mass effect (reactive fluid forces), the fluid moments and current effects. However there is no consideration of path following. Thus, this remains a problem to be solved.

"Path following of underactuated autonomous underwater vehicles in the presence of ocean currents" by Walter Caharija *et al* describes a control strategy for 3D straight line path following in the presence of ocean currents.

The invention is defined by the independent claims.

Viewed from a first aspect, the invention provides a method of guiding an underwater snake robot, the snake robot comprising a flexible elongate structure capable of bending itself at two or more joints along its length in order to generate an undulating motion to thereby propel itself through water and the snake robot having a length that is at least ten times its maximum width, the method comprising:

determining a desired path for the robot, the desired path extending between a current location of the robot and a destination point;
during forward movement of the robot, when the robot diverges from the desired path, determining an extent of the divergence from the desired path;
calculating a desired longitudinal orientation for the robot as a static or dynamic function of the extent of divergence from the desired path, the desired orientation being non-parallel with the desired path when the robot is affected by drift forces such as ocean currents;
controlling the robot so that its longitudinal orientation is aligned with the desired orientation, and the longitudinal orientation of the robot is non-parallel with the desired path; and
repeating the calculating and controlling steps and/or using a feedback loop in order to provide constant reassessment of the divergence and re-calculation of the desired heading, such that the longitudinal orientation of the robot oscillates around a steady-state constant value that is non-parallel with the desired path.

This method provides improved control of a snake robot since it allows the robot to be guided more effectively even when outside influences, such as ocean currents, cause divergence from the desired path. The method is particularly adapted to address constant irrotational ocean currents, and in the presence of such currents it has been shown to provide effective guidance to keep a snake robot following a desired path, with the orientation of the robot oscillating stably around a steady state orientation that compensates for the effect of the ocean current and thereby provides forward movement along the desired path.

The desired path may be identical to a required travel path to the final destination, in which case the robot will initially start on the desired path and also on the travel path and be guided at all times as set out above. Alternatively, in some circumstances the required travel path may extend along some direction that is spaced apart from the robot, such that the robot does not begin its guided movement at a point on travel path toward the destination. Hence, in an initial phase occurring prior to the above method steps, the robot may first be guided along a desired path toward the travel path, wherein the desired path may be a path that converges on the travel path within set parameters, for example to place the robot on the travel path within a set distance or within a set time period. The travel path may for instance be an infinite line, or a series of lines or curves that connect a series of waypoints. Once the robot is on the travel path then guidance occurs as set out above, with the desired path extending along the travel path to a destination point, which may be a waypoint or an intermediate destination. When the robot is not yet on the travel path, then it receives instructions to travel toward it with a desired path extending from the current location of the robot toward the travel path in order to guide the robot toward the travel path in a convergent manner. In some examples the desired path may be set up with a destination point at some intermediate point on the travel path, ahead of the robot, to thereby ensure the required convergence. When the intermediate destination point is reached then a new destination point can be set that is further along the travel path. Obviously if no divergence occurs, for example when there is no transverse current, then the robot can be controlled to follow the desired path with the longitudinal orientation of the robot being along the desired path.

The desired orientation may be a desired heading angle, i.e. an angle in the yaw direction, and the preferred embodiment described herein focusses on heading angle as an example. It will however be appreciated that the snake robot moves in three dimensions and hence its longitudinal orientation can be controlled in terms of pitch angle as well as yaw angle, or in terms of other parameterizations of SO(3).

The method may be applied repetitively and/or using a feedback loop in order to provide constant reassessment of the divergence and re-calculation of the desired heading. As noted above, the result will be an orientation oscillating around a steady-state constant value that compensates for external influences transverse to the desired path, such as water currents. It is important to note that in the preferred embodiments this orientation is not oscillating around a zero point, but instead the steady-state constant value is non-parallel with the desired path. The 'forward' direction of the robot is hence non-parallel to the desired direction of 'forward' motion so that the snake robot moves with a controlled sideslipping motion.

In the current context a snake robot is any type of multi-linked robot designed to flex at two or more joints, typically at a large number of joints, to thereby generate an undulating motion similar to the motion of a snake or an eel. Such robots may alternatively be designated as eel robots or lamprey robots and the term "snake robot" is intended to cover this. The snake robot should however be seen as excluding so-called "fish robots" which may have fewer links and do not have an elongate body structure, which is a feature of a snake robot. The snake robot may be differentiated from fish robots by reference to its elongate shape. The snake robot has a length that is at least ten times its maximum width. The snake robot can also be distinguished from fish robots by reference to the type of motion, which is discussed further below.

The underwater snake robot should also be distinguished from ground based snake robots. Ground based snake robots are considerably different since they rely on friction between the robot and the ground, often using wheels to prevent sideways slipping, in order to move the robot. In contrast, underwater snake robots can move sideways, are affected by hydrodynamic forces and torques, and they do not rely on interaction with a solid surface using friction.

In preferred examples there may be at least 3 links joined by controllable joints. There may be at least 10 links, for example. A typical snake robot may have 10 links flexing at 9 joints or 20 links flexing at 19 joints, each joint providing one or more degrees of freedom. The robot may comprise a number of rigid links coupled end-to-end with controllable flexing joints. The joints may permit relative rotation in a single plane to provide a two dimensional movement. Alternatively the joints may permit a higher dimensional movement, for example allowing for undulations both horizontally and vertically.

The undulating motion can be characterised as a sinusoidal type motion. This may, for example, be lateral undulation or eel-like motion. This type of motion is different to the motion of multi-link fish robots. In example embodiments the motion of the snake robot is generated by making each joint *i* of the underwater snake robot track a sinusoidal reference signal:

$$\phi_i^*(t) = \alpha g(i,n)\sin(\omega t + (i-1)\delta) + \gamma,$$

where $\alpha$ and $\omega$ are the maximum amplitude and the frequency, respectively, $\delta$ determines the phase shift between the joints, while the function g(*i,n*) is a scaling function for the amplitude of joint *i* which allows to describe a quite general class of sinusoidal functions, including several different snake motion patterns. The parameter $\gamma$ is a joint offset coordinate that can be used to control the direction of the locomotion of the snake robot. Preferably, the parameters $\alpha$ and $\delta$ are

fixed and the parameters $\omega$ and $\gamma$ are varied in order to control the speed and direction of the snake robot.

Preferably the step of calculating a desired orientation for the robot makes use of an integral line-of-sight guidance law. In a preferred embodiment the desired orientation is given by a line-of-sight guidance law using a possibly time-varying look-ahead distance $\Delta$. The parameter $\Delta$ is a design parameter set by the user. The desired orientation preferably corresponds to the orientation of the robot when headed towards the point that lies a distance $\Delta$ ahead of the robot, but not along the desired path as for traditional line-of-sight methods but along a parallel displacement of the desired path. The size of the parallel displacement is given by the extent of divergence from the desired path, and may be determined based on the time integral of, or any other dynamic function of, the distance to the desired path over time, so that the desired orientation for the robot is calculated as a function of a time integral of a function of the distance to the path. An alternative to using a look-ahead distance $\Delta$ is to use a fixed point along the parallel displacement of the desired path. When using a look-ahead distance $\Delta$ this distance may be set as about the length of the robot or larger, for example it may be about twice the length of the robot or larger. There is a compromise between a larger look-ahead distance, which gives a well-damped convergence, but a slow rate of convergence, and a smaller look-ahead distance, which reduces the damping and increases the rate of convergence, but could result in poor performance or instability if it is too small. A distance set as at least the robot length is considered to provide good results. The distance may for example be between one times and four times the robot length. The orientation of the snake robot may be defined as the average of the link angles, for example:

$$\bar{\theta} = \frac{1}{n}\sum_{i=1}^{n}\theta_i .$$

In preferred examples the orientation of the robot is determined using an integral line-of-sight guidance law defined by:

$$\bar{\theta}_{\text{ref}} = -\arctan\left(\frac{p_y + \sigma y_{int}}{\Delta}\right), \qquad \Delta > 0$$

$$\dot{y}_{int} = \frac{\Delta p_y}{(p_y + \sigma y_{int})^2 + \Delta^2}$$

where $p_y$ is the cross-track error, while $\Delta$ and $\sigma > 0$ are both constant design parameters and $y_{int}$ illustrates the integral action of the guidance law. In particular, $\Delta$ denotes the *look-ahead distance* that influences the rate of convergence to the desired path and $\sigma > 0$ is the integral gain. It has been found that this guidance law is particularly effective in ensuring that the snake robot will converge to the desired path.

The preferred robot may include a gait pattern controller for generating the undulating motion of the robot. The preferred robot may include an orientation control device for adjusting the orientation to the desired orientation. This could for example be a heading control device for adjusting the heading to follow the desired orientation. This device would hence provide adjustments in the yaw direction. The robot may alternatively or additionally include a pitch control device for allowing ascent and descent during the forward movement.

In a second aspect, the invention provides a controller for guiding an underwater snake robot, the snake robot comprising a flexible elongate structure capable of bending itself at two or more joints along its length in order to generate an undulating motion to thereby propel itself through water and the snake robot having a length that is at least ten times its maximum width, the controller being arranged to:

determine a desired path for the robot, the desired path extending between a current location of the robot and a destination point;

during forward movement of the robot, when a the robot diverges from the desired path, determine an extent of the divergence from the desired path;

calculate a desired longitudinal orientation for the robot as a function of the extent of divergence from the desired path, the desired orientation in steady-state being non-parallel with the desired path when the robot is affected by drift forces such as ocean currents;

control the robot so that its longitudinal orientation is aligned with the desired longitudinal orientation, and the longitudinal orientation of the robot is non-parallel with the desired path; and

repeat the calculating and controlling and/or use a feedback loop in order to provide constant reassessment of the divergence and re-calculation of the desired heading, such that the longitudinal orientation of the robot oscillates around a steady-state constant value that is non-parallel with the desired path.

The controller may be arranged to carry out the method discussed above. Thus, the controller may be arranged to provide constant reassessment of the divergence and re-calculation of the desired orientation, for example by repetition of the above steps and/or by using a feedback loop.

The invention extends in preferred embodiments to include an underwater snake robot incorporating the above described controller. This snake robot may be any type of multi-linked elongated robot designed to flex at two or more joints, typically at a large number of joints, to thereby generate an undulating motion similar to the motion of a snake or an eel. As noted above, the snake robot may be differentiated from fish robots by reference to its elongate shape. The snake robot has a length that is at least ten times its maximum width. The snake robot can also be distinguished from fish robots by reference to the type of motion, which is discussed further below.

In preferred examples there may be at least 3 or more links. Typical examples may have 10 links flexing at 9 joints or 20 links flexing at 19 joints. The robot may comprise a number of rigid links coupled end-to-end with controllable flexing joints. The joints may permit relative rotation in a single plane to provide a two dimensional movement. Alternatively the joints may permit a higher dimensional movement, for example allowing for undulations both horizontally and vertically.

The controller may be arranged to move the snake robot using an undulating motion that can be characterised as a sinusoidal type motion. The controller may include a gait pattern controller for generating the undulating motion of the robot. This may, for example, be a lateral undulation or an eel like motion. In example embodiments the motion of the snake robot is generated by making each joint i of the underwater snake robot track a sinusoidal reference signal as defined above.

Preferably the controller is arranged to use an integral line-of-sight guidance law. In a preferred embodiment the desired orientation is given by a line-of-sight guidance law using a possibly time-varying look-ahead distance $\Delta$. The parameter $\Delta$ is a design parameter set by the user. The desired orientation preferably corresponds to the orientation of the robot when headed towards the point that lies a distance $\Delta$ ahead of the robot, but not along the desired path as for traditional line-of-sight methods but along a parallel displacement of the desired path. The size of the parallel displacement is given by the extent of divergence from the desired path over time, and may be determined based on the time integral of, or any other dynamic function of, the distance to the desired path, so that the desired orientation for the robot is calculated as a function of a time integral of a function of the distance to the path. The magnitude of the look-ahead distance $\Delta$ can be set as discussed above. Alternatively, in place of a look-ahead distance, a fixed point along the parallel displacement of the desired path may be used.

In preferred examples the controller is arranged to use an integral line-of-sight guidance law as defined above in order to determine the orientation of the robot.

A preferred controller includes an orientation control device for adjusting the orientation to follow the desired orientation. The orientation control device may for example by a heading control device for controlling adjustments in the yaw direction. The controller may alternatively or additionally include a pitch control device for allowing ascent and descent during the forward movement of the snake robot.

The invention further extends to a computer programme product comprising instructions which, when executed, will configure a controller for a snake robot to control the snake robot in accordance with the method of the first aspect and/or preferred features thereof, as discussed above.

Certain preferred embodiments of the invention will now be described by way of example only and with reference to the accompanying drawings in which:

Figures 1a and 1b show kinematic parameters for an example underwater snake robot as well as forces and torques acting on each link;
Figure 2 is a diagram of the structure of a controller for an underwater snake robot;
Figure 3a illustrates an integral line-of-sight guidance law;
Figure 3b illustrates an integral line-of-sight guidance law in three dimensions;
Figure 4 shows a proposed steady state sideslipping motion of the underwater snake robot;
Figure 5 illustrates a lateral undulation motion;
Figure 6 illustrates an eel-like motion;
Figure 7 shows a stability analysis of a Poincare map for lateral undulation;
Figure 8 shows a stability analysis of a Poincare map for eel-like motion;
Figure 9 includes plots of heading angle, cross track error and the path of the robot for integral line-of-sight path following guidance for lateral undulation;
Figure 10 shows similar plots for eel-like motion;
Figure 11 shows the results of an experiment for straight line path following using lateral undulation with the snake robot initially spaced apart from the travel path by 1.89m and with zero cross-current;
Figure 12 shows the results of an experiment for straight line path following using eel-like motion with the snake robot initially spaced apart from the travel path by 2.75m and with zero cross-current;

Figure 13 is a sequence of drawings based on photographs of the motion of the underwater snake robot during the experiment of Figure 11;

Figure 14 is a sequence of drawings based on photographs of the motion of the underwater snake robot during the experiment of Figure 13;

Figure 15 shows the results of an experiment similar to Figure 11 with the initial spacing at 1.5728m and the addition of cross-current;

Figure 16 shows the results of an experiment similar to Figure 15 with the initial spacing at 0.7661m;

Figure 17 is a sequence of drawings based on photographs of the motion of the underwater snake robot during the experiment of Fig. 16.

Dynamic modelling of underwater snake robots

**Notation and defined symbols**

An underwater snake robot consists of $n$ rigid links of equal length $2l$ interconnected by $n$-1 joints. The links are assumed to have the same mass $m$ and moment of inertia $J = \frac{1}{3}ml^2$ in this example. It will be appreciated that differing links could also be used, with varying mass and/or an alternative geometry. In this example, for the sake of simplicity, the mass of each link is assumed to be uniformly distributed so that the link CM (centre of mass) is located at its centre point (at length $l$ from the joint at each side). The total mass of the snake robot is therefore $nm$. In the following sections, the kinematics and dynamics of the robot will be described in terms of the mathematical symbols described in Table I and illustrated in Fig. 1. The following vectors and matrices are used in the subsequent sections:

$$\mathbf{A} = \begin{bmatrix} 1 & 1 & & \\ & \ddots & \ddots & \\ & & 1 & 1 \end{bmatrix}, \mathbf{D} = \begin{bmatrix} 1 & -1 & & \\ & \ddots & \ddots & \\ & & 1 & -1 \end{bmatrix},$$

where $\mathbf{A}, \mathbf{D} \in \mathbb{R}^{(n-1)\times n}$. Furthermore,

$$\mathbf{e} = \begin{bmatrix} 1 & \cdots & 1 \end{bmatrix}^T \in \mathbb{R}^n, \mathbf{E} = \begin{bmatrix} \mathbf{e} & \mathbf{0}_{n\times 1} \\ \mathbf{0}_{n\times 1} & \mathbf{e} \end{bmatrix} \in \mathbb{R}^{2n\times 2},$$

$$\sin\theta = \begin{bmatrix} \sin\theta_1 & \cdots & \sin\theta_n \end{bmatrix}^T \in \mathbb{R}^n, \mathbf{S}_\theta = \mathrm{diag}(\sin\theta) \in \mathbb{R}^{2n\times 2},$$

$$\cos\theta = \begin{bmatrix} \cos\theta_1 & \cdots & \cos\theta_n \end{bmatrix}^T \in \mathbb{R}^n, \mathbf{C}_\theta = \mathrm{diag}(\cos\theta) \in \mathbb{R}^{2n\times 2},$$

$$\mathrm{sgn}\theta = \begin{bmatrix} \mathrm{sgn}\theta_1 & \cdots & \mathrm{sgn}\theta_n \end{bmatrix}^T \in \mathbb{R}^n$$

$$\dot{\theta}^2 = \begin{bmatrix} \dot{\theta}_1^2 & \cdots & \dot{\theta}_n^2 \end{bmatrix}^T \in \mathbb{R}^n, \mathbf{J} = J\mathbf{I}_n, \mathbf{L} = l\mathbf{I}_n, \mathbf{M} = m\mathbf{I}_n$$

$$\mathbf{K} = \mathbf{A}^T \left(\mathbf{D}\mathbf{D}^T\right)^{-1} \mathbf{D}, \mathbf{V} = \mathbf{A}^T \left(\mathbf{D}\mathbf{D}^T\right)^{-1} \mathbf{A}$$

TABLE I: Definition of mathematical terms

| Symbol | Description | Vector |
|---|---|---|
| $n$ | The number of links | |
| $l$ | The half length of a link | |
| $m$ | Mass of each link | |
| $J$ | Moment of inertia of each link | |
| $\theta_i$ | Angle between link i and the global $x$ axis | $\theta \in \mathbb{R}^n$ |
| $\phi_i$ | Angle of joint i | $\phi \in \mathbb{R}^{n-1}$ |
| $(x_i,y_j)$ | Global coordinates of the CM of link i | $\mathbf{X},\mathbf{Y} \in \mathbb{R}^n$ |
| $(p_x,p_y)$ | Global coordinates of the CM of the robot | $\mathbf{p}_{CM} \in \mathbb{R}^2$ |
| $u_i$ | Actuator torque of joint between link i and link i + 1 | $\mathbf{u} \in \mathbb{R}^{n-1}$ |
| $u_{i-1}$ | Actuator torque of joint between link i and link $i$-1 | $\mathbf{u} \in \mathbb{R}^{n-1}$ |
| $(f_{x,i},f_{y,i})$ | Fluid force on link i | $\mathbf{f}_x,\mathbf{f}_y \in \mathbb{R}^n$ |
| $\tau_i$ | Fluid torque on link i | $\tau \in \mathbb{R}^n$ |
| $(h_{x,i},h_{y,i})$ | Joint constraint force on link i from link $i$ + 1 | $\mathbf{h}_x,\mathbf{h}_y \in \mathbb{R}^{n-1}$ |
| $-(h_{x,i-1},h_{y,i-1})$ | Joint constraint force on link i from link $i$ -1 | $\mathbf{h}_x,\mathbf{h}_y \in \mathbb{R}^{n-1}$ |

**Kinematics of the underwater snake robot**

The snake robot is assumed to move in a virtual horizontal plane, fully immersed in water, and has $n$ +2 degrees of freedom ($n$ links angles and the $x$ - $y$ position of the robot). The *link angle* of each link $i \in \{1,\cdots,n\}$ of the snake robot is denoted by $\theta_i \in \mathbb{R}$, while the *joint angle* of joint $i \in \{1,...,n-1\}$ is given by $\phi_i = \theta_i - \theta_{i-1}$. The *heading* (or *orientation)* $\bar{\theta} \in \mathbb{R}\,\mathbb{R}$ of the snake is defined as the average of the link angles

$$\bar{\theta} = \frac{1}{n}\sum_{i=1}^{n}\theta_i. \qquad (1)$$

The global frame position $\mathbf{p}_{\mathrm{CM}} \in \mathbb{R}^2$ of the CM (center of mass) of the robot is given by

$$\mathbf{p}_{\mathrm{CM}} = \begin{bmatrix} p_x \\ p_y \end{bmatrix} = \begin{bmatrix} \frac{1}{nm}\sum_{i=1}^{n} m x_i \\ \frac{1}{nm}\sum_{i=1}^{n} m y_i \end{bmatrix} = \frac{1}{n}\begin{bmatrix} \mathbf{e}^T\mathbf{X} \\ \mathbf{e}^T\mathbf{Y} \end{bmatrix}, \quad (2)$$

where $(x_i,y_i)$ are the global frame coordinates of the CM of link $i$, $X = [x_1,\cdots,x_n]^T \in \mathbb{R}^n$ and $\mathbf{Y} = \left[y_1,\cdots,y_n\right]^T \in \mathbb{R}^n$. The forward velocity of the robot is denoted by $\upsilon_t \in \mathbb{R}$ and is defined as the component of the CM velocity along the current heading of the snake, i.e.

$$\bar{\upsilon}_t = \dot{p}_x \cos\bar{\theta} + \dot{p}_y \sin\bar{\theta}. \qquad (3)$$

The links are constrained by the joints according to

$$\mathbf{DX} + l\mathbf{A}\cos\theta = \mathbf{0}, \quad \mathbf{DY} + l\mathbf{A}\sin\theta = \mathbf{0}. \quad (4)$$

It is shown in the paper "Modelling of underwater snake robots" referenced above that the position of the individual links as a function of the CM position and the link angles is given by

$$\mathbf{X} = -l\mathbf{K}^T\cos\theta + \mathbf{e}p_x, \qquad \mathbf{Y} = -l\mathbf{K}^T\sin\theta + \mathbf{e}p_y, \quad (5)$$

where $\mathbf{K} = \mathbf{A}^T\left(\mathbf{DD}^T\right)^{-1}\mathbf{D} \in \mathbb{R}^{n\times n}$, and where $\mathbf{DD}^T$ is non-singular and thereby invertible. The linear velocities of the links are given by

$$\dot{\mathbf{X}} = l\mathbf{K}^T\mathbf{S}_\theta\dot{\theta} + \mathbf{e}\dot{p}_x, \quad \dot{\mathbf{Y}} = -l\mathbf{K}^T\mathbf{C}_\theta\dot{\theta} + \mathbf{e}\dot{p}_y. \qquad (6)$$

The linear accelerations of the links are found by differentiating the velocity of the individual links (6) with respect to time, which gives

$$\ddot{\mathbf{X}} = l\mathbf{K}^T\left(\mathbf{C}_\theta\dot{\theta}^2 + \mathbf{S}_\theta\ddot{\theta}\right) + \mathbf{e}\ddot{p}_x, \quad \ddot{\mathbf{Y}} = l\mathbf{K}^T\left(\mathbf{S}_\theta\dot{\theta}^2 - \mathbf{C}_\theta\ddot{\theta}\right) + \mathbf{e}\ddot{p}_y. \quad (7)$$

Note that equation (7) has been adjusted compared to the corresponding expression presented in the paper "Modelling of underwater snake robots" in order to express the acceleration of the links in a more proper way, by also taking into account the acceleration of the centre of mass.

**Hydrodynamic modelling**

As has been noted in the bio-robotics community, underwater snake (eel-like) robots bring a promising prospective to improve the efficiency and manoeuvrability of modern-day underwater vehicles. The dynamic modelling of the contact forces is, however, quite complicated compared to the modelling of the overall rigid motion. The hydrodynamic modelling approach from "Modelling of underwater snake robots" that is considered herein takes into account both the linear and the nonlinear drag forces (resistive fluid forces), the added mass effect (reactive fluid forces), the fluid moments and current effects. In particular, it was shown that the fluid forces on all links can be expressed in vector form as

$$\mathbf{f} = \begin{bmatrix}\mathbf{f_x}\\ \mathbf{f_y}\end{bmatrix} = \begin{bmatrix}\mathbf{f_{A_x}}\\ \mathbf{f_{A_y}}\end{bmatrix} + \begin{bmatrix}\mathbf{f}^{\mathrm{I}}_{\mathbf{D_x}}\\ \mathbf{f}^{\mathrm{I}}_{\mathbf{D_y}}\end{bmatrix} + \begin{bmatrix}\mathbf{f}^{\mathrm{II}}_{\mathbf{D_x}}\\ \mathbf{f}^{\mathrm{II}}_{\mathbf{D_y}}\end{bmatrix}. \qquad (8)$$

The vectors $\mathbf{f_{A_x}}$ and $\mathbf{f_{A_y}}$ represent the effects from added mass forces and are expressed as

$$\begin{bmatrix}\mathbf{f_{A_x}}\\ \mathbf{f_{A_y}}\end{bmatrix} = -\begin{bmatrix}\mu_n\left(\mathbf{S}_\theta\right)^2 & -\mu_n\mathbf{S}_\theta\mathbf{C}_\theta\\ -\mu_n\mathbf{S}_\theta\mathbf{C}_\theta & \mu_n\left(\mathbf{C}_\theta\right)^2\end{bmatrix}\begin{bmatrix}\ddot{\mathbf{X}}\\ \ddot{\mathbf{Y}}\end{bmatrix} - \begin{bmatrix}-\mu_n\mathbf{S}_\theta\mathbf{C}_\theta & -\mu_n\left(\mathbf{S}_\theta\right)^2\\ \mu_n\left(\mathbf{C}_\theta\right)^2 & \mu_n\mathbf{S}_\theta\mathbf{C}_\theta\end{bmatrix}\begin{bmatrix}\mathbf{V}_x^a\\ \mathbf{V}_y^a\end{bmatrix}\dot{\theta}, \qquad (9)$$

where $\mathbf{V}_x^a = \operatorname{diag}\left(V_{x,1},\cdots,V_{x,n}\right) \in \mathbb{R}^{n\times n}$, $\mathbf{V}_y^a = \operatorname{diag}\left(V_{y,1},\cdots,V_{y,n}\right) \in \mathbb{R}^{n\times n}$ and $[V_{x,i},V_{y,i}]^T$ is the current velocity expressed in inertial frame coordinates. The vectors $\mathbf{f}_{\mathbf{D_x}}^{\mathrm{I}}$, $\mathbf{f}_{\mathbf{D_y}}^{\mathrm{I}}$ and $\mathbf{f}_{\mathbf{D_x}}^{\mathrm{II}}$, $\mathbf{f}_{\mathbf{D_y}}^{\mathrm{II}}$ present the effects from the linear (10) and nonlinear drag forces (11), respectively, where the relative velocities are given by (12).

$$\begin{bmatrix} \mathbf{f}_{\mathbf{D_x}}^{\mathrm{I}} \\ \mathbf{f}_{\mathbf{D_y}}^{\mathrm{I}} \end{bmatrix} = -\begin{bmatrix} c_t\left(\mathbf{C}_\theta\right)^2 + c_n\left(\mathbf{S}_\theta\right)^2 & \left(c_t - c_n\right)\mathbf{S}_\theta\mathbf{C}_\theta \\ \left(c_t - c_n\right)\mathbf{S}_\theta\mathbf{C}_\theta & c_t\left(\mathbf{S}_\theta\right)^2 + c_n\left(\mathbf{C}_\theta\right)^2 \end{bmatrix} \begin{bmatrix} \dot{\mathbf{X}} - \mathbf{V}_x \\ \dot{\mathbf{Y}} - \mathbf{V}_y \end{bmatrix} \quad (10)$$

$$\begin{bmatrix} \mathbf{f}_{\mathbf{D_x}}^{\mathrm{II}} \\ \mathbf{f}_{\mathbf{D_y}}^{\mathrm{II}} \end{bmatrix} = -\begin{bmatrix} c_t\mathbf{C}_\theta & -c_n\mathbf{S}_\theta \\ c_t\mathbf{S}_\theta & c_n\mathbf{C}_\theta \end{bmatrix} \operatorname{sgn}\left(\begin{bmatrix} \mathbf{V}_{\mathbf{r_x}} \\ \mathbf{V}_{\mathbf{r_y}} \end{bmatrix}\right) \begin{bmatrix} \mathbf{V}_{\mathbf{r_x}}^2 \\ \mathbf{V}_{\mathbf{r_y}}^2 \end{bmatrix} \quad (11)$$

$$\begin{bmatrix} \mathbf{V}_{\mathbf{r_x}} \\ \mathbf{V}_{\mathbf{r_y}} \end{bmatrix} = \begin{bmatrix} \mathbf{C}_\theta & \mathbf{S}_\theta \\ -\mathbf{S}_\theta & \mathbf{C}_\theta \end{bmatrix} \begin{bmatrix} \dot{\mathbf{X}} - \mathbf{V}_x \\ \dot{\mathbf{Y}} - \mathbf{V}_y \end{bmatrix} \quad (12)$$

In addition, the fluid torques on all links are

$$\tau = -\Lambda_1\ddot{\theta} - \Lambda_2\dot{\theta} - \Lambda_3\dot{\theta}\,|\dot{\theta}\,|, \quad (13)$$

where $\Lambda_1 = \lambda_1\mathbf{I}_n, \Lambda_2 = \lambda_2\mathbf{I}_n$ and $\Lambda_3 = \lambda_3\mathbf{I}_n$. The coefficients $c_t, c_n, \lambda_2, \lambda_3$ represent the drag forces parameters due to the pressure difference between the two sides of the body, and the parameters $\mu_n, \lambda_1$ represent the added mass of the fluid carried by the moving body.

**Equations of motion**

This section presents the equations of motion for the underwater snake robot. It has been shown that the force balance equations for all links may be expressed in matrix form as

$$m\ddot{\mathbf{X}} = \mathbf{D}^T\mathbf{h}_x + \mathbf{f}_{\mathbf{x}}, \quad m\ddot{\mathbf{Y}} = \mathbf{D}^T\mathbf{h}_y + \mathbf{f}_{\mathbf{y}}. \quad (14)$$

Note that the link accelerations may also be expressed by differentiating (4) twice with respect to time. This gives

$$\mathbf{D}\ddot{\mathbf{X}} = l\mathbf{A}\left(\mathbf{C}_\theta\dot{\theta}^2 + \mathbf{S}_\theta\ddot{\theta}\right), \quad \mathbf{D}\ddot{\mathbf{Y}} = l\mathbf{A}\left(\mathbf{S}_\theta\dot{\theta}^2 - \mathbf{C}_\theta\ddot{\theta}\right). \quad (15)$$

We obtain the acceleration of the centre of mass by differentiating (2) twice with respect to time, inserting (14), and noting that the constraint forces $\mathbf{h}_x$ and $\mathbf{h}_y$, are cancelled out when the link accelerations are summed. This gives

$$\begin{bmatrix} \ddot{p}_x \\ \ddot{p}_y \end{bmatrix} = \frac{1}{n}\begin{bmatrix} \mathbf{e}^T\ddot{\mathbf{X}} \\ \mathbf{e}^T\ddot{\mathbf{Y}} \end{bmatrix} = \frac{1}{nm}\begin{bmatrix} \mathbf{e}^T & \mathbf{0}_{1\times n} \\ \mathbf{0}_{1\times n} & \mathbf{e}^T \end{bmatrix}\mathbf{f} \quad (16)$$

By inserting (7), (8) and (9) into (16) the acceleration of the centre of mass may be expressed as

$$\begin{bmatrix} \ddot{p}_x \\ \ddot{p}_y \end{bmatrix} = -\mathbf{M}_p \begin{bmatrix} \mathbf{e}^T \mu_n \mathbf{S}_\theta^2 & -\mathbf{e}^T \mu_n \mathbf{S}_\theta \mathbf{C}_\theta \\ -\mathbf{e}^T \mu_n \mathbf{S}_\theta \mathbf{C}_\theta & \mathbf{e}^T \mu_n \mathbf{C}_\theta^2 \end{bmatrix} \begin{bmatrix} l\mathbf{K}^T (\mathbf{C}_\theta \dot{\theta}^2 + \mathbf{S}_\theta \ddot{\theta}) \\ l\mathbf{K}^T (\mathbf{S}_\theta \dot{\theta}^2 - \mathbf{C}_\theta \ddot{\theta}) \end{bmatrix} - \mathbf{M}_p \begin{bmatrix} -\mathbf{e}^T \mu_n \mathbf{S}_\theta \mathbf{C}_\theta & -\mathbf{e}^T \mu_n \mathbf{S}_\theta^2 \\ \mathbf{e}^T \mu_n \mathbf{C}_\theta^2 & \mathbf{e}^T \mu_n \mathbf{S}_\theta \mathbf{C}_\theta \end{bmatrix} \begin{bmatrix} \mathbf{V}_x^a \\ \mathbf{V}_y^a \end{bmatrix} \dot{\theta} + \mathbf{M}_p \begin{bmatrix} \mathbf{e}^T \mathbf{f}_{\mathbf{Dx}} \\ \mathbf{e}^T \mathbf{f}_{\mathbf{Dy}} \end{bmatrix} \quad (17)$$

where

$$\mathbf{M}_p = \begin{bmatrix} m_{11} & m_{12} \\ m_{21} & m_{22} \end{bmatrix} = \begin{bmatrix} nm + \mathbf{e}^T \mu_n \mathbf{S}_\theta^2 \mathbf{e} & -\mathbf{e}^T \mu_n \mathbf{S}_\theta \mathbf{C}_\theta \mathbf{e} \\ -\mathbf{e}^T \mu_n \mathbf{S}_\theta \mathbf{C}_\theta \mathbf{e} & nm + \mathbf{e}^T \mu_n \mathbf{C}_\theta^2 \mathbf{e} \end{bmatrix}^{-1}. \quad (18)$$

and $\mathbf{f}_{\mathbf{Dx}} = \mathbf{f}_{\mathbf{D_x}}^{\mathrm{I}} + \mathbf{f}_{\mathbf{D_x}}^{\mathrm{II}}$ and $\mathbf{f}_{\mathbf{Dy}} = \mathbf{f}_{\mathbf{D_y}}^{\mathrm{I}} + \mathbf{f}_{\mathbf{D_y}}^{\mathrm{II}}$ are the drag forces in the *x* and *y* directions.

Additionally, it is easily verifiable that the determinant $n^2m^2 + nm\mu_n + \mu_n^2 \sum_{i=1}^{n-1} \sum_{j=i+1}^{n} (\sin(\theta_i - \theta_j))^2$ is non-zero for $n \neq 0$ and $m \neq 0$.

The torque balance equations for all links is expressed in matrix form as

$$\mathbf{J}\ddot{\theta} = \mathbf{D}^T \mathbf{u} - l\mathbf{S}_\theta \mathbf{A}^T \mathbf{h}_x + l\mathbf{C}_\theta \mathbf{A}^T \mathbf{h}_y + \tau, \quad (19)$$

where $\tau$ is given from (13).

What now remains is to remove the constraint forces from (19). By premultiplying (14) by D and solving for $\mathbf{h}_x$ and $\mathbf{h}_y$, we can write the expression for the joint constraint forces as

$$\begin{aligned} \mathbf{h}_x &= (\mathbf{D}\mathbf{D}^T)^{-1} \mathbf{D}(m\ddot{\mathbf{X}} + \mu_n (\mathbf{S}_\theta)^2 \ddot{\mathbf{X}} - \mu_n \mathbf{S}_\theta \mathbf{C}_\theta \ddot{\mathbf{Y}} - \mu_n \mathbf{S}_\theta \mathbf{C}_\theta \mathbf{V}_x^a \dot{\theta} - \mu_n (\mathbf{S}_\theta)^2 \mathbf{V}_y^a \dot{\theta} - \mathbf{f}_{\mathbf{D_x}}^{\mathrm{I}} - \mathbf{f}_{\mathbf{D_x}}^{\mathrm{II}}) \\ \mathbf{h}_y &= (\mathbf{D}\mathbf{D}^T)^{-1} \mathbf{D}(m\ddot{\mathbf{Y}} - \mu_n \mathbf{S}_\theta \mathbf{C}_\theta \ddot{\mathbf{X}} + \mu_n (\mathbf{C}_\theta)^2 \ddot{\mathbf{Y}} + \mu_n (\mathbf{C}_\theta)^2 \mathbf{V}_x^a \dot{\theta} + \mu_n \mathbf{S}_\theta \mathbf{C}_\theta \mathbf{V}_y^a \dot{\theta} - \mathbf{f}_{\mathbf{D_y}}^{\mathrm{I}} - \mathbf{f}_{\mathbf{D_y}}^{\mathrm{II}}). \end{aligned} \quad (20)$$

Inserting in (19) the joint constraints forces (20) and also replacing DX, $\mathbf{D}\ddot{\mathbf{Y}}$ with (15), $\ddot{\mathbf{X}}$, $\ddot{\mathbf{Y}}$ with (7) and $\ddot{p}_x$, $\ddot{p}_y$ with (17), and solving for $\ddot{\theta}$, we can finally express the orientation dynamics of an underwater snake robot as

$$\mathbf{M}_\theta \ddot{\theta} + \mathbf{W}_\theta \dot{\theta}^2 + \mathbf{V}_\theta \dot{\theta} + \Lambda_3 |\dot{\theta}| \dot{\theta} + \mathbf{K}_{\mathbf{Dx}} \mathbf{f}_{\mathbf{Dx}} + \mathbf{K}_{\mathbf{Dy}} \mathbf{f}_{\mathbf{Dy}} = \mathbf{D}^T \mathbf{u}, \quad (21)$$

where $\mathbf{M}_\theta$, $\mathbf{W}_\theta$, $\mathbf{V}_\theta$, $\mathbf{K}_{\mathbf{Dx}}$ and $\mathbf{K}_{\mathbf{Dy}}$ are defined as

$$\mathbf{M}_\theta = \mathbf{J} + ml^2 \mathbf{S}_\theta \mathbf{V} \mathbf{S}_\theta + ml^2 \mathbf{C}_\theta \mathbf{V} \mathbf{C}_\theta + \mathbf{\Lambda}_1 + l^2 \mu_n \mathbf{K}_1 \mathbf{K}^T \mathbf{S}_\theta + l^2 \mu_n \mathbf{K}_2 \mathbf{K}^T \mathbf{C}_\theta \quad (22)$$

$$\mathbf{W}_\theta = ml^2 \mathbf{S}_\theta \mathbf{V} \mathbf{C}_\theta - ml^2 \mathbf{C}_\theta \mathbf{V} \mathbf{S}_\theta + l^2 \mu_n \mathbf{K}_1 \mathbf{K}^T \mathbf{C}_\theta - l^2 \mu_n \mathbf{K}_2 \mathbf{K}^T \mathbf{S}_\theta \quad (23)$$

$$\mathbf{V}_\theta = \mathbf{\Lambda}_2 - l\mu_n \mathbf{K}_2 \mathbf{V}_x^a - l\mu_n \mathbf{K}_1 \mathbf{V}_y^a \quad (24)$$

$$\mathbf{K}_{\mathbf{Dx}} = l\mu_n m_{11} A_1 \mathbf{e}\mathbf{e}^T - l\mu_n m_{21} A_2 \mathbf{e}\mathbf{e}^T - l\mathbf{S}_\theta \mathbf{K} \quad (25)$$

$$\mathbf{K}_{\mathbf{Dy}} = l\mu_n m_{12} A_1 \mathbf{e}\mathbf{e}^T - l\mu_n m_{22} A_2 \mathbf{e}\mathbf{e}^T + l\mathbf{C}_\theta \mathbf{K} \quad (26)$$

where

$$\mathbf{K}_1 = \mathbf{A}_1 + \mu_n \mathbf{A}_1 \mathbf{e}\mathbf{e}^T (m_{12}\mathbf{S}_\theta \mathbf{C}_\theta - m_{11}\mathbf{S}_\theta^2) - \mu_n \mathbf{A}_2 \mathbf{e}\mathbf{e}^T (m_{22}\mathbf{S}_\theta \mathbf{C}_\theta - m_{21}\mathbf{S}_\theta^2),$$

$$\mathbf{K}_2 = \mathbf{A}_2 - \mu_n \mathbf{A}_1 \mathbf{e}\mathbf{e}^T (m_{11}\mathbf{S}_\theta \mathbf{C}_\theta - m_{12}\mathbf{C}_\theta^2) + \mu_n \mathbf{A}_2 \mathbf{e}\mathbf{e}^T (m_{21}\mathbf{S}_\theta \mathbf{C}_\theta - m_{22}\mathbf{C}_\theta^2),$$

$$\mathbf{A}_1 = \mathbf{S}_\theta \mathbf{K} \mathbf{S}_\theta^2 + \mathbf{C}_\theta \mathbf{K} \mathbf{S}_\theta \mathbf{C}_\theta, \mathbf{A}_2 = \mathbf{S}_\theta \mathbf{K} \mathbf{S}_\theta \mathbf{C}_\theta + \mathbf{C}_\theta \mathbf{K} \mathbf{C}_\theta^2.$$

*Remark 1:* The model (17,21) has been adjusted compared to the model in the referenced paper by redefining the expression of the link accelerations as in (7) in order to avoid a singularity issue of the model.

In summary, the equations of motion for the underwater snake robot are given by (17) and (21). By introducing the state variable $\mathbf{x} = \left[\theta^T, \mathbf{p}_{\mathrm{CM}}^T, \dot{\theta}^T, \dot{\mathbf{p}}_{\mathrm{CM}}^T\right]^T \in \mathbb{R}^{2n+4}$, we can rewrite the model of the robot compactly in state space form as

$$\dot{\mathbf{x}} = \left[\dot{\theta}^T, \dot{\mathbf{p}}_{\mathrm{CM}}^T, \ddot{\theta}^T, \ddot{\mathbf{p}}_{\mathrm{CM}}^T\right]^T = \mathbf{F}(\mathbf{x}, \mathbf{u}) \quad (27)$$

where the elements of F(x,u) are found by solving (17) and (21) for $\ddot{\mathbf{p}}_{\mathrm{CM}}$ and $\ddot{\theta}$, respectively.

Integral line-of-sign path following control

In this section we propose an integral line-of-sight path following control scheme for underwater snake robots. The controller consists of three main components. The first component is the gait pattern controller, which produces a sinusoidal motion pattern which propels the robot forward. The second component is the heading controller, which steers the robot along an initial desired path to guide the robot towards and subsequently along a desired travel path. The third component is the integral LOS guidance law, which generates the desired heading angle in order to follow the desired path. An inner loop PD controller is used to control the joint angles $\phi$, while an outer loop controller is used for generating the reference joint angles in order to achieve the desired sinusoidal gait pattern and also the desired heading $\theta_{\mathrm{ref}}$ (Fig. 2). The three components of the path following controller will be presented in the following subsections.

**Control Objective**

The path following control objective is to make the robot converge to a desired straight line path and subsequently progress along the path at some non-zero forward velocity $\overline{\upsilon_t} > 0$, where $\overline{\upsilon_t}$ is defined in (3). We consider it as less important to accurately control the forward velocity of the robot. The global *x* axis is aligned with the desired straight line path, and thus the position of the robot along the global *y* axis corresponds to the cross track error, and the heading of the robot (1) is the angle that the robot forms with the desired straight line path (Fig. 3). The objectives of the control system can be formalized as

$$\lim_{t\to\infty} p_y = 0 \quad (28)$$

$$\lim_{t\to\infty} \overline{\theta} = \overline{\theta}_{ss} \quad (29)$$

$$\lim_{t\to\infty} \overline{\upsilon}_t > 0 \quad (30)$$

where $\overline{\theta_{ss}}$ is a constant value which will be non-zero when the underwater snake robot is subjected to ocean currents that have a component in the transverse direction of the path. Note that for underwater snake robots having an oscillatory gait pattern the control objectives imply that $p_y$ and $\overline{\theta}$ should have steady state oscillations about zero and $\overline{\theta}_{ss}$ , respectively.

*Remark 2:* Note that the heading of the robot is not required to oscillate around zero but rather to oscillate around a steady-state constant value (29) in the presence of ocean currents in the transverse direction of the path. In particular, the underwater snake robot then needs to keep a non-zero heading angle in steady state in order to compensate for the current effect. A non-zero angle will allow the underwater snake robot to side-slip in order to compensate for the current effects and thus stay on the desired path, as shown in Fig. 4.

*Remark 3:* The magnitude of the current should be bounded by a constant $V_{max} > 0$ such that $V_{max} > \sqrt{V_{x,i}^2 + V_{y,i}^2}$ , where $[V_{x,i}, V_{y,i}]^T$ is the current velocity expressed in inertial frame coordinates. Note that the value of $V_{max}$ that the robot is able to compensate is directly connected to the physical limitations of the robot and the number of the links.

### Motion Pattern

Previous studies on swimming snake robots have been focused on two motion patterns; lateral undulation and eel-like motion. In the approach proposed here we will use a general sinusoidal motion pattern that describes a broader class of motion patterns that includes lateral undulation and eel-like motion. Lateral undulation, which is the fastest and most common form of ground snake locomotion, can be achieved by creating continuous body waves, with a constant amplitude, that are propagated backwards from head to tail. In order to achieve lateral undulation, the snake robot is commanded to follow a serpenoid curve. Eel-like motion can be achieved by propagating lateral axial undulations with increasing amplitude from head to tail. In the approach proposed here, a general sinusoidal motion pattern is achieved by making each joint $i \in \{1,\cdots,n-1\}$ of the underwater snake robot track the sinusoidal reference signal

$$\phi_i^*(t) = \alpha g(i,n)\sin(\omega t + (i-1)\delta) + \gamma, \qquad (31)$$

where $\alpha$ and $\omega$ are the maximum amplitude and the frequency, respectively, $\delta$ determines the phase shift between the joints, while

the function g($i,n$) is a scaling function for the amplitude of joint i which allows (31) to describe a quite general class of sinusoidal functions, including several different snake motion patterns. For instance, g($i,n$) = 1 gives lateral undulation, while g($i,n$) = ($n$ - $i$)/($n$ + 1) gives eel-like motion. The parameter $\gamma$ is a joint offset coordinate that we will use to control the direction of the locomotion.

### Outer-Loop Controller

In previous approaches the parameters $\alpha$ and $\delta$ are typically fixed and the parameters $\omega,\gamma$ are used to control the speed and the direction of the snake robot. In the currently proposed approach, the same idea will be used in order to steer the underwater snake robot to a desired orientation. In particular, the outer-loop controller will be responsible for generating the reference joint angles in order to ensure that the desired orientation is achieved. The orientation $\overline{\theta}$ of the robot is given by Eq. (1). We propose to define the reference orientation using the following integral line-of-sight guidance law

$$\overline{\theta}_{\text{ref}} = -\arctan\left(\frac{p_y + \sigma y_{int}}{\Delta}\right), \qquad \Delta > 0 \quad (32)$$

$$\dot{y}_{int} = \frac{\Delta p_y}{(p_y + \sigma y_{int})^2 + \Delta^2} \qquad (33)$$

where $p_y$ is the cross-track error (i.e., the position of the underwater snake robot along the global $y$ axis), while $\Delta$ and $\sigma > 0$ are both constant design parameters and $y_{int}$ illustrates the integral action of the guidance law. In particular, $\Delta$ denotes the *look-ahead distance* that influences the rate of convergence to the desired path and $\sigma > 0$ is the integral gain. This choice of orientation reference will make the snake robot converge to the straight line path, i.e. make $p_y$ converge to zero, cf. Fig. 3.

*Remark 4:* The *look-ahead distance* $\Delta$ is an important design parameter that directly influences the transient motion of the underwater snake robot. Choosing $\Delta$ large will result in a well-damped transient motion, but the rate of convergence to the path will be slow, cf. Fig. 3. On the other hand, choosing $\Delta$ too small will result in poor performance or even instability. A rule of thumb is to choose $\Delta$ larger than twice the length of the robot.

*Remark 5:* The integral effect becomes significant when the ocean current effect pushes the underwater snake robot away from its path. Note that (33) is designed such that the integral action has less influence when the robot is far from the path, reducing the risk of wind-up effects. In fact, (32,33) behaves as a traditional LOS law when the underwater snake robot is far away from the path while the integral action comes into effect when the robot is closer to the desired path.

We use the parameter $\gamma$ to control the direction of the locomotion of the robot. In particular, to steer the heading $\overline{\theta}$ according to the integral LOS angle in (32), we choose the joint angle offset according to

$$\gamma = k_\theta \left(\overline{\theta} - \overline{\theta}_{\text{ref}}\right), \qquad (34)$$

where $k_\theta > 0$ is a control gain.

Inner-loop controller

In order to make the joint angle $\phi_i$ follow its reference signal $\phi_i^*$, a PD controller is used:

$$u_i = k_p(\phi_i^* - \phi_i) + k_d(\dot{\phi}_i^* - \dot{\phi}_i), \quad i \in \{1, \cdots, n-1\}, \qquad (35)$$

where $k_p > 0$ and $k_d > 0$ are the gains of the controller.

Stability analysis based on the Poincare map

In this section, the theory of Poincare maps is employed to prove that the integral LOS path following controller proposed above generates a locally exponentially stable periodic orbit in the state space of the underwater snake robot. This periodic orbit implies that the robot locomotes along the straight line path in the presence of current.

**The Poincare map**

The Poincare map is a useful tool for studying the stability of periodic solutions in dynamical systems. In particular, the stability of a periodic orbit of a dynamical system is related to the stability of the fixed point of the corresponding Poincare map of the system. We will thus use a Poincare map approach as a stability analysis tool for the closed-loop system of an underwater snake robot with the path following controller presented above. In particular, the exponential stability of the system will be investigated by checking if the fixed point is an exponentially stable equilibrium point of the discrete system. The fixed point $\overline{\mathbf{x}}^*$ is locally exponentially stable if the magnitudes of all the eigenvalues of the Jacobian linearization of the Poincare map $\mathbf{J}_P(\overline{\mathbf{x}}^*)$ about the fixed point are strictly less than one.

Note that in order to investigate the stability properties using Poincare maps, the model of the underwater snake robot should be represented as an autonomous system. The model (27) with the path following controller proposed above can be rewritten as the following autonomous system

$$\begin{aligned} \dot{\mathbf{x}} &= \mathbf{F}\left(\mathbf{x}, \frac{T}{2\pi}\beta\right), \qquad \mathbf{x}(t_0) = \mathbf{x}_0 \\ \dot{\beta} &= \frac{2\pi}{T}, \qquad \beta(t_0) = \frac{2\pi t_0}{T} \end{aligned} \qquad (36)$$

where $\beta = 2\pi t / T$ is a new state variable and $T = 2\pi / \omega$ is the period of the cyclic locomotion generated by the sinusoidal gait pattern in (31). The state variable $\beta$ is periodic since we force $\beta$ to be $0 \leq \beta < 2\pi$, i.e. we set $\beta$ to zero each time $\beta = 2\pi$.

What now remains is to specify the Poincare section for the underwater snake robot. We choose the global $x$

axis as the Poincare section $S$ of the system in (36). Furthermore, we exclude $p_x$ from the Poincare map since the forward position of the robot will not undergo limit cycle behaviour like the other states of the system. As a result, the Poincare section is given by $S = \{(\theta, p_y, \dot{\theta}, \beta) | p_y = 0\}$, which means that the vector of the independent time-periodic states constrained to $S$ can be expressed as $\overline{x} = \left[\theta^T, \dot{\theta}^T, \dot{\mathbf{p}}_{CM}^T, \beta\right]^T \in \mathbb{R}^{2n+3}$.

*Remark 6:* Note that since $p_x$ is not present on the right hand side in any of the dynamic equations in (27), we can exclude $p_x$ from the Poincare map without affecting the other state variables of the system (27).

*Remark* 7: In this discussion we consider a one-sided Poincare map by assuming that the Poincare section is crossed when the centre of mass position of the underwater snake robot crosses the $x$ axis from above.

**Stability analysis of the Poincare map**

In order to investigate the stability of the robot with the integral LOS path following controller proposed above, we consider an underwater snake robot with $n$ = 3 links, each one having length $2l$ = 0.14 m and mass $m$ = 0.6597 kg. The hydrodynamic parameters are $c_t$ =0.2639, $c_n$ =8.4, $\mu_n$ =0.3958, $\lambda_1$ =2.2988·10$^{-7}$, $\lambda_2$ =4.3103·10$^{-4}$ and $\lambda_3$ =2.2629·10$^{-5}$. An extensive discussion about the values of the fluid parameters can be found in the paper "Modelling of underwater snake robots" referenced above. The values of a constant ocean current in the inertial frame are [0.005,0.01] m/sec. The joint PD controller (35) is used for each joint with parameters $k_p$ = 20, $k_d$ = 5, and lateral undulation and eel-like motion are achieved by choosing g($i$,$n$) = 1 and g($i$,$n$) = ($n$ - $i$) / ($n$ + 1), respectively, with gait parameters $\alpha$ = 70°, $\delta$ = 70° and $\omega$ = 120° / s in (31). Initially, we run simulations with the proposed control strategy until the robot reaches the desired path, and then we choose the initial values of $y_{int}$ as 5.33 and 6.54 for lateral undulation and eel-like motion, respectively. Note that these initial values are used for the stability analysis of the system by using Poincare map. Furthermore, the control gain in (34) is $k_\theta$ = 0.8, while the guidance law parameters in (32-33) are chosen as $\Delta = 2ln$ , and $\sigma$ = 0.01.

The Poincare map of the underwater snake robot model in (17,21) found using Matlab R2011b. The dynamics is calculated using the ode23tb solver with a relative and absolute error tolerance of10$^{-4}$ . Using the Newton-Raphson algorithm the fixed point, $\overline{\mathbf{x}}^* \in \mathbb{R}^9$ , of the Poincare map for lateral undulation and eel-like motion are given by (37) and (38), respectively.

$$\overline{\mathbf{x}}^* = [-35.06°, -41.79°, 17.68°, -108.83°/\mathrm{s}, 26.49°/\mathrm{s}, 106.96°/\mathrm{s}, 10.59\mathrm{cm/s}, -3.86\mathrm{cm/s}, 194.04°]^T \quad (37)$$

$$\overline{\mathbf{x}}^* = [-15.77°, -29.99°, -2.21°, -116.75°/\mathrm{s}, 20.62°/\mathrm{s}, 70.89°/\mathrm{s}, 9.10\mathrm{cm/s}, -1.57\mathrm{cm/s}, 191.88°]^T \quad (38)$$

The locomotion of the robot over one period is shown in Fig. 5 and 6 for lateral undulation and eel-like motion, respectively. The initial values of the states of the robot are given by (37) and (38), and the initial position is chosen as $\mathbf{p}_{CM}$ = 0 . From Fig. 5 and 6, we can see that after one period of the motion the state variables have returned to their initial values given by (37) and (38). In addition, after one period of motion the position of the robot along the $x$ axis has increased. Furthermore, Fig. 7a and 8a illustrate the limit cycle that is traced out by the three link angles of the robot for lateral undulation and eel-like motion.

The Jacobian linearization of the Poincare map about the fixed points (37) and (38) are calculated, and the magnitudes of the eigenvalues of $\mathbf{J}_P(\overline{\mathbf{x}}^*) \in \mathbb{R}^{9\times 9}$ are found to be given by (39) and (40) for lateral undulation and eel-like motion, respectively

$$|\mathrm{eig}(\mathbf{J}_P(\overline{\mathbf{x}}^*))| = [0.394, 0.394, 0.041, 0.008, 0.002, 0.002, 2.82\times 10^{-4}, 2.82\times 10^{-4}, 4.84\times 10^{-5}]^T \quad (39)$$

$$|\mathrm{eig}(\mathbf{J}_P(\overline{\mathbf{x}}^*))| = [0.548, 0.548, 0.059, 0.059, 0.011, 1.49\times 10^{-3}, 2.92\times 10^{-4}, 1.02\times 10^{-4}, 9.25\times 10^{-5}]^T \quad (40)$$

From (39) and (40), it is easily seen that all the eigenvalues, both for lateral undulation and eel-like motion cases, are strictly less than one. Therefore we can conclude that the periodic orbit is locally exponentially stable for the given choice of controller parameters both for lateral undulation and eel-like motion. Since the periodic orbit is exponentially stable and the system returns to $p_y = 0$ with time period $T$, we can conclude that the control objective (28) is achieved.

Furthermore, it has been shown that for an underwater snake robot under anisotropic drag effects propulsive forces are positive as long as $\mathrm{sgn}(\theta_i) = \mathrm{sgn}(\dot{y}_i)$ and $\mathrm{sgn}(\theta_i) = \mathrm{sgn}(\ddot{y}_i)$ . Fig. 7b-7c and 8b-8c show that these conditions are valid over the majority of the period for both lateral undulation and eel-like motion. Hence the robot moves forward and the control objective (30) is satisfied. Since the control objectives (28) and (30) are both satisfied, we can argue that the control objective (29) must be satisfied. Note that if the heading did not oscillate around $\overline{Q}_{ss}$ , but rather around zero, then the robot would not be able to compensate the ocean current effects and the robot would drift away from the desired path, which contradicts the fulfilment of control objective (28).

*Remark 8:* A more formal stability analysis of the system in (17,21) with the proposed controller remains a challenging task, mainly due to the complexity of the dynamic system equations. Thus a numerical approach is adopted herein. Note that by using the Poincare map approach, we have only proven that the stability of the proposed path following controller presented above holds for the numerical parameters of the system presented in the beginning of this subsection. However, simulations indicate that the proposed path following controller can be applied to steer the robot to the desired path in the presence of ocean currents for other parameters of the system and for a wide range of the current values.

## Simulation Study

This section presents simulation results in order to investigate the performance of the integral line-of-sight path following controller described above. The model and controller parameters are the same as in the preceding section. The initial values of all states of the robot are set to zero except for the initial position of the centre of mass, which is selected as $\mathbf{p}_{CM}(0) = [0,0.5]$. In Fig. 9a and Fig. 10a we can see that (31-35) make the heading angle converge to and oscillate about the desired heading angle given by (32) for lateral undulation and eel-like motion, respectively. Note that the heading of the robot does not converge to oscillations about zero but rather converges to a steady state constant value, $\overline{\theta}_{ss}$, which means that the control objective (29) is achieved. Moreover, Fig. 9b and Fig. 10b show that control objective (28) is verified, i.e. the integral LOS guidance law (32) will make the cross track error converge to zero. Finally, from Fig. 9c and Fig. 10c we can see that the CM of the underwater snake robot converges to the desired path for both lateral undulation and eel-like motion. Fig. 9-10 clearly shows that the heading, the cross track error and the position of the robot have a steady state oscillatory behaviour when the robot reaches the desired path, as it has been predicted above.

## Experimental Study

The performance of the path following controller has been investigated through experiments with a physical underwater snake robot 100 for both lateral undulation and eel-like motion. The snake robot 100 was guided toward and then along a travel path 102. Figures 11 to 17 show the results of the experiments.

## Experimental setup

The path following controller was experimentally investigated using an underwater snake robot 100 having 18 identical joint modules mounted horizontally and vertically in an alternating fashion. For the experimental process, an underwater motion capture system was used in order to have accurate measurements of the robot's position and orientation. The measured position and the absolute angle of the tail were obtained from an external computer, and afterwards these measurements were sent through UDP in LabVIEW 2013 to another computer where the path following controller was implemented.

The individual computations and the implementation of the path following controller are described in the following steps. Having the measurements of the tail position and orientation, and the individual joint angles, we calculated, using the kinematics equations, the center of mass position, $\mathbf{p}_{CM}$, and the absolute link angles, $\theta$ , of the underwater snake robot 100. The LOS path following controller of the underwater snake robot 100 was implemented on an external computer according to (31), (32), (33) and (34), i.e. for the lateral undulation and eel-like motion gait patterns. Specifically, the reference joint angles, computed by (31), were sent to each joint module of the robot via the CAN bus running through the robot. A proportional controller implemented in the microcontroller of each joint module controlled the joint angle according to the received reference angle. The joint torque controller given by (35) was not implemented, since accurate torque control is not supported by the servo motors installed in the snake robot 100. The estimation of the robot's orientation was calculated according to (1), i.e. as the average of the individual link angles. Moreover, the reference angles were calculated by (31) for $n = 9$ choosing $g(i,n) = 1$ and $g(i,n) = (n - i) / (n + 1)$ in case of lateral undulation or eel-like motion, respectively. The initial joint angles were zero in all the trials, while the initial heading and position of the robot are defined for each trial.

Experimental Results for LOS path following controller

Initially, experiments were performed with no current effects and $\sigma = 0$. In this case, the guidance strategy is reduced to the well-known LOS path following guidance law. The straight line path following controller was experimentally investigated for both lateral undulation and eel-like motion patterns. The LOS guidance law angle given by (32,33) was calculated with a look-ahead distance equal to half the length of the robot, i.e. $\Delta = 0.9$ m for fast convergence, due to the limited working area covered by the camera system. Furthermore, the control gain in (34) was $k_\theta = 0.4$ and $k_\theta = 0.6$ for lateral undulation and eel-like motion, respectively. The joint angle offset was saturated according to $\phi_0 = [-20°,20°]$ in order to keep the joint reference angles within reasonable bounds and taking into account the physical robot's joint angle constraints. Furthermore, the gait parameters were set to $\alpha = 35°$ for lateral undulation and $\alpha = 40°$ for eel-like motion, $\delta = 40°$ and $\omega = 120°$ /s. During the experiments, the robot was initially headed along the desired path (the *x* axis), and the initial distance from the CM to the desired path was 1.89 m for lateral undulation and 2.75 m for eel-like motion pattern. The experimental results for the all the trials are presented in Fig. 11 for lateral undulation and Fig. 12 for eel-like motion pattern, where it is easily seen that the robot converged nicely towards and moved along the travel path 102 during all trials both for lateral undulation and eel-like motion patterns. In particular, we can see that the center of mass of the underwater snake robot 100 converges to the desired path for all the trials.

In Fig. 11a and Fig. 12a we can see that (34) makes the heading angle converge to and oscillate around zero for both lateral undulation and eel-like motion patterns. Moreover, Fig. 11b and Fig. 12b show that the cross track error converges to and oscillates around zero. Fig. 11c and Fig. 12c clearly show that the heading, the cross track error and the position of the robot have a steady state oscillatory behavior when the robot reaches the travel path 102. Note that this was expected since for an underwater snake robot 100 with revolute joints, it is difficult to achieve a purely non-oscillating motion of the CM. Similar to the oscillatory behaviour of the CM, the orientation of the robot was also expected to oscillate, as it is shown in Fig. 11a and Fig. 12a. Figures 13 and 14 are drawings taken from photographs at various stages of the movement of the robot.

Experimental Results for Integral LOS path following controller

We investigated the performance of the proposed control strategy for a constant current in the inertial frame. Using the flow water speed generator this was set equal to [-0.07 cos(45°),-0.07sin(45°)] m/s. This was achieved by defining the straight line path at a 45 degree angle with respect to the direction of the water flow and setting the water flow speed to 0.07 m/s. The integral LOS angle given by (32,33) was calculated with a look-ahead distance equal to the length of the robot, i.e. $\Delta = 1.6$m for fast convergence due to the limited length of the tank, and $\sigma = 0.01$. Furthermore, the initial values of $y_{int}$were zero and the control gain in (34) was $k_\theta = 0.3$. The joint angle offset was saturated according to $\phi_0 = [-20°,20°]$ in order to keep the joint reference angles within reasonable bounds with respect to the maximum allowable joint angles of the physical robot. Furthermore, the gait parameters $\alpha = 30°$ and $\delta = 40°$ and $\omega = 80°$ /s are chosen for the integral LOS path following controller.

The straight line path following controller was experimentally investigated from two different sets of initial conditions. In both trials, the robot was headed parallel to the travel path 102 (the *x* axis), and the initial distance from the CM to the travel path 102 was -1.5728 m and -0.7661 m, respectively. In Fig. 15a and Fig. 16a we can see that (34) makes the heading angle converge to and oscillate about the desired heading angle given by (32,33) for lateral undulation. Note that the desired heading of the robot does not converge to oscillations about zero, but rather converges to a steady state constant value $\overline{\theta}_{ss}$ to compensate for the effect of the water current. Moreover, Fig. 15b and Fig. 16b show that the cross track error converges to and oscillates about zero. Finally, from Fig. 15c and Fig. 16c, we can see that the center of mass of the underwater snake robot 100 converges to the travel path 102 for lateral undulation.

Fig. 17 shows drawings taken from photographs of the experiment for the results presented in Fig. 16, and this illustrates that the robot converged nicely towards and moved along the travel path 102. This is supported by the plots of the cross-track error in Fig. 16b, which shows that the cross-track error converges to and oscillates about zero. Fig. 15 and Fig. 16 clearly show that the heading, the cross track error and the position of the robot have a steady state oscillatory behavior when the robot reaches the travel path 102, similar to the results presented for the LOS path following controller.

*Remark 9:* Note that results presented in Fig. 15, Fig. 16 and Fig. 17 indicate that the proposed integral LOS path following controller successfully steered the underwater snake robot towards and along the required travel path, compensating for the unknown hydrodynamic disturbances by keeping a constant non-zero heading. This makes the proposed control strategy applicable for motion planning of underwater snake robots under the influence of constant irrotational ocean currents and other ocean drift effects.

Conclusions

A straight line path following controller for an underwater snake robot in the presence of constant irrotational currents is proposed. The integral line-of-sight guidance law is combined with a directional controller to steer the robot to the travel path, where integral action is introduced to compensate for the effect of ocean currents as the robot travels along a desired path. The integral LOS guidance law has been shown to be effective for underwater snake robots to compensate for the current effect and achieve path following of straight lines. In addition, the stability of the locomotion along the straight line path in the presence of current has been analysed. By use of a Poincare map, it has been proved that all state variables of an underwater snake robot, except the position along the forward direction, trace out an exponentially stable periodic orbit when the integral LOS path following controller is applied. Simulation and experimental results have confirmed the good performance of the proposed control strategy.

## Claims

1. A method of guiding an underwater snake robot (100), the snake robot comprising a flexible elongate structure capable of bending itself at two or more joints along its length in order to generate an undulating motion to thereby propel itself through water and the snake robot having a length that is at least ten times its maximum width, the method comprising:

   determining a desired path (102) for the robot, the desired path extending between a current location of the robot and a destination point;
   during forward movement of the robot, when the robot diverges from the desired path, determining an extent of the divergence from the desired path;
   calculating a desired longitudinal orientation for the robot as a static or dynamic function of the extent of divergence from the desired path, the desired longitudinal orientation being non-parallel with the desired path when the robot is affected by drift forces such as ocean currents; and
   controlling the robot so that its longitudinal orientation is aligned with the desired longitudinal orientation, and the longitudinal orientation of the robot is non-parallel with the desired path; and
   repeating the calculating and controlling steps and/or using a feedback loop in order to provide constant reassessment of the divergence and re-calculation of the desired heading, such that the longitudinal orientation of the robot oscillates around a steady-state constant value that is non-parallel with the desired path (102).

2. A method as claimed in claim 1, wherein the snake robot (100) comprises at least three links joined by controllable joints.

3. A method as claimed in any preceding claim, wherein the snake robot (100) comprises at least ten links joined by controllable joints.

4. A method as claimed in any preceding claim, wherein the undulating motion is a sinusoidal type motion generated by making each joint i of the underwater snake robot (100) track a sinusoidal reference signal defined by:

$$\phi_i^*(t) = \alpha g(i,n)\sin(\omega t + (i-1)\delta) + \gamma,$$

   where $\alpha$ and $\omega$ are the maximum amplitude and the frequency, respectively, $\delta$ determines the phase shift between the joints, while the function g(*i,n*) is a scaling function for the amplitude of joint i.

5. A method as claimed in any preceding claim, wherein the step of calculating a desired orientation for the robot (100) makes use of an integral line-of-sight guidance law.

6. A method as claimed in any preceding claim, wherein the desired orientation is given by a line-of-sight guidance law using a look-ahead distance $\Delta$ and the desired orientation corresponds to the orientation of the robot (100) when headed towards the point that lies a distance $\Delta$ ahead of the robot along a parallel displacement of the desired path (102).

**7.** A method as claimed in claim 6, wherein the size of the parallel displacement is given by the extent of divergence from the desired path (102) over time so that the desired orientation for the robot (100) is calculated as a function of a time integral of a function of the distance to the path.

**8.** A method as claimed in claim 6 or 7, wherein the look-ahead distance Δ is set as at least the robot length

**9.** A method as claimed in claim 6, 7 or 8, wherein the orientation of the robot (100) is determined using an integral line-of-sight guidance law defined by:

$$\bar{\theta}_{\mathrm{ref}} = -\arctan\left(\frac{p_y + \sigma y_{int}}{\Delta}\right), \qquad \Delta > 0$$

$$\dot{y}_{int} = \frac{\Delta p_y}{(p_y + \sigma y_{int})^2 + \Delta^2}$$

where $p_y$ is the cross-track error while Δ and $\sigma > 0$ are both constant design parameters and $y_{int}$ illustrates the integral action of the guidance law, with Δ denoting a look-ahead distance.

**10.** A controller for guiding an underwater snake robot (100), the snake robot comprising a flexible elongate structure capable of bending itself at two or more joints along its length in order to generate an undulating motion to thereby propel itself through water and the snake robot having a length that is at least ten times its maximum width, the controller being arranged to:

determine a desired path (102) for the robot, the desired path extending between a current location of the robot and a destination point;
during forward movement of the robot, when the robot diverges from the desired path, determine an extent of the divergence from the desired path;
calculate a desired longitudinal orientation for the robot as a function of the extent of divergence from the desired path, the desired longitudinal orientation in steady-state being non-parallel with the desired path when the robot is affected by drift forces such as ocean currents;
control the robot so that its longitudinal orientation is aligned with the desired longitudinal orientation, and the longitudinal orientation of the robot is non-parallel with the desired path; and
repeat the calculating and controlling and/or use a feedback loop in order to provide constant reassessment of the divergence and re-calculation of the desired heading, such that the longitudinal orientation of the robot oscillates around a steady-state constant value that is non-parallel with the desired path.

**11.** A controller as claimed in claim 10, wherein the controller is arranged to carry out the method of any of claims 1 to 9.

**12.** An underwater snake robot (100) with a controller as claimed in claim 10 or 11.

**13.** A computer programme product comprising instructions which, when executed, will configure a controller for a snake robot (100) to control the snake robot in accordance with the method of any of claims 1 to 9.

**Patentansprüche**

**1.** Verfahren zum Leiten eines Unterwasserschlangenroboters (100), wobei der Schlangenroboter eine flexible längliche Struktur umfasst, die im Stande ist, sich bei zwei oder mehreren Gelenken entlang ihrer Länge zu biegen, um eine wellenförmige Bewegung zu erzeugen, wodurch er sich durch Wasser fortbewegt und wobei der Schlangenroboter eine Länge aufweist, die zumindest zehnmal dessen maximale Breite ist, wobei das Verfahren umfasst:

Ermitteln eines gewünschten Pfads (102) für den Roboter, wobei sich der gewünschte Pfad zwischen einem aktuellen Standort des Roboters und einem Zielpunkt erstreckt;
während Vorwärtsbewegung des Roboters, wenn der Roboter von dem gewünschten Pfad abweicht, Ermitteln eines Ausmaßes der Abweichung von dem gewünschten Pfad;
Berechnen einer gewünschten Längsausrichtung für den Roboter als eine statische oder dynamische Funktion des Abweichungsausmaßes von dem gewünschten Pfad, wobei die gewünschte Längsausrichtung nicht mit dem gewünschten Pfad parallel ist, wenn der Roboter von Treibkräften wie Meeresströmungen beeinflusst wird; und
Steuern des Roboters, so dass seine Längsausrichtung mit der gewünschten Längsausrichtung ausgerichtet ist und die Längsausrichtung des Roboters nicht mit dem gewünschten Pfad parallel ist; und
Wiederholen der Berechnungs- und Steuerungsschritte und/oder Verwenden einer Rückkopplungsschleife, um konstante Neubeurteilung der Abweichung und Neuberechnung des gewünschten Kurses bereitzustellen, so dass die Längsausrichtung des Roboters um einen stationären festen Wert oszilliert, der nicht parallel mit dem gewünschten Pfad (102) ist.

**2.** Verfahren nach Anspruch 1, wobei der Schlangenroboter (100) zumindest drei Verbindungen umfasst, die durch steuerbare Gelenke angelenkt sind.

**3.** Verfahren nach einem vorstehenden Anspruch, wobei der Schlangenroboter (100) zumindest zehn Verbindungen umfasst, die durch steuerbare Gelenke angelenkt sind.

**4.** Verfahren nach einem vorstehenden Anspruch, wobei die wellenförmige Bewegung eine sinusförmige Bewegung ist, die erzeugt wird, indem jedes Gelenk i des Unterwasserschlangenroboters (100) veranlasst wird, ein Sinusreferenzsignal zu

$$\phi_i^*(t) = \alpha g(i,n)\sin(\omega t + (i-1)\delta) + \gamma,$$

verfolgen, das definiert wird durch
wo $\alpha$ und $\omega$ die Maximalamplitude beziehungsweise die Frequenz sind, $\delta$ die Phasenverschiebung zwischen den Gelenken bestimmt, während die Funktion *g (i, n)* eine Skalierungsfunktion für die Amplitude von Gelenk i ist.

**5.** Verfahren nach einem vorstehenden Anspruch, wobei der Schritt vom Berechnen einer gewünschten Ausrichtung für den Roboter (100) ein integrales Sichtleitgesetz nutzt.

**6.** Verfahren nach einem vorstehenden Anspruch, wobei die gewünschte Ausrichtung von einem Sichtlinienleitgesetz unter Verwendung einer Vorausdistanz Δ vorgegeben wird und die gewünschte Ausrichtung der Ausrichtung des Roboters (100) entspricht, wenn er zu dem Punkt gerichtet ist, der entlang einer parallelen Verschiebung des gewünschten Pfads (102) um eine Distanz Δ vor dem Roboter liegt.

**7.** Verfahren nach Anspruch 6, wobei die Größe der parallelen Verschiebung von dem Abweichungsausmaß von dem gewünschten Pfad (102) über Zeit vorgegeben wird, so dass die gewünschte Ausrichtung für den Roboter (100) als eine Funktion eines Zeitintegrals einer Funktion der Distanz zu dem Pfad berechnet wird.

**8.** Verfahren nach Anspruch 6 oder 7, wobei die Vorausdistanz Δ zumindest als die Roboterlänge eingestellt wird.

**9.** Verfahren nach Anspruch 6, 7 oder 8, wobei die Ausrichtung des Roboters (100) unter Verwendung eines integralen Sichtleitgesetzes ermittelt wird, das definiert wird durch:

$$\overline{\theta}_{\text{ref}} = -\arctan\left(\frac{p_y + \sigma y_{int}}{\Delta}\right), \qquad \Delta > 0$$

$$\dot{y}_{int} = \frac{\Delta p_y}{(p_y + \sigma y_{int})^2 + \Delta^2}$$

wo $p_y$ der Querspurfehler ist, während $\Delta$ und $\sigma > 0$ beide konstante Designparameter sind und $y_{int}$ die integrale Wirkung des Leitgesetzes veranschaulicht, wobei $\Delta$ eine Vorausdistanz bezeichnet.

**10.** Steuereinheit zum Leiten eines Unterwasserschlangenroboters (100), wobei der Schlangenroboter eine flexible längliche Struktur umfasst, die im Stande ist, sich bei zwei oder mehreren Gelenken entlang ihrer Länge zu biegen, um eine wellenförmige Bewegung zu erzeugen, wodurch er sich durch Wasser fortbewegt und wobei der Schlangenroboter eine Länge aufweist, die zumindest zehnmal dessen maximale Breite ist, wobei die Steuereinheit für Folgendes eingerichtet ist:

Ermitteln eines gewünschten Pfads (102) für den Roboter, wobei sich der gewünschte Pfad zwischen einem aktuellen Standort des Roboters und einem Zielpunkt erstreckt;
während Vorwärtsbewegung des Roboters, wenn der Roboter von dem gewünschten Pfad abweicht, Ermitteln eines Ausmaßes der Abweichung von dem gewünschten Pfad;
Berechnen einer gewünschten Längsausrichtung für den Roboter als eine Funktion des Abweichungsausmaßes von dem gewünschten Pfad, wobei die gewünschte Längsausrichtung stationär nicht mit dem gewünschten Pfad parallel ist, wenn der Roboter von Treibkräften wie Meeresströmungen beeinflusst wird;
Steuern des Roboters, so dass seine Längsausrichtung mit der gewünschten Längsausrichtung ausgerichtet ist und die Längsausrichtung des Roboters nicht mit dem gewünschten Pfad parallel ist; und
Wiederholen des Berechnens und Steuerns und/oder Verwenden einer Rückkopplungsschleife, um konstante Neubeurteilung der Abweichung und Neuberechnung des gewünschten Kurses bereitzustellen, so dass die Längsausrichtung des Roboters um einen stationären festen Wert oszilliert, der nicht parallel mit dem gewünschten Pfad ist.

**11.** Steuereinheit nach Anspruch 10, wobei die Steuereinheit eingerichtet ist, das Verfahren nach einem der Ansprüche 1 bis 9 umzusetzen.

**12.** Unterwasserschlangenroboter (100) mit einer Steuereinheit nach Anspruch 10 oder 11.

**13.** Computerprogrammprodukt, umfassend Anweisungen, die, wenn ausgeführt, eine Steuereinheit für einen Schlangenroboter (100) konfigurieren, den Schlangenroboter gemäß dem Verfahren nach einem der Ansprüche 1 bis 9 zu steuern.

## Revendications

**1.** Procédé de guidage d'un robot serpent sous-marin (100), le robot serpent comprenant une structure allongée souple capable de se courber à deux articulations ou plus le long de sa longueur afin de générer un mouvement ondulant pour se propulser ainsi dans l'eau et le robot serpent présentant une longueur qui fait au moins dix fois sa largeur maximale, le procédé comprenant les étapes consistant à :

déterminer une trajectoire souhaitée (102) pour le robot, la trajectoire souhaitée s'étendant entre un emplacement actuel du robot et un point de destination ;
pendant le mouvement vers l'avant du robot, lorsque le robot s'écarte de la trajectoire souhaitée, déterminer une ampleur de l'écart par rapport à la trajectoire souhaitée ;
calculer une orientation longitudinale souhaitée du robot en tant que fonction statique ou dynamique de l'ampleur de l'écart par rapport à la trajectoire souhaitée, l'orientation longitudinale souhaitée n'étant pas parallèle à la trajectoire souhaitée lorsque le robot est soumis à des forces de dérive telles que des courants océaniques ; et
commander le robot de sorte que son orientation longitudinale soit alignée avec l'orientation longitudinale souhaitée, et l'orientation longitudinale du robot n'est pas parallèle à la trajectoire désirée ; et
répéter les étapes de calcul et de commande et/ou utiliser une boucle de rétroaction afin de fournir une réévaluation constante de l'écart et un recalcul de la trajectoire souhaitée, de sorte que l'orientation longitudinale du robot oscille autour d'une valeur constante stable qui n'est pas parallèle à la trajectoire souhaitée (102).

**2.** Procédé selon la revendication 1, dans lequel le robot serpent (100) comprend au moins trois liaisons reliées par des articulations commandables.

**3.** Procédé selon une quelconque revendication précédente, dans lequel le robot serpent (100) comprend au moins dix liaisons reliées par des articulations commandables.

4. Procédé selon une quelconque revendication précédente, dans lequel le mouvement ondulant est un mouvement de type sinusoïdal généré en faisant que chaque articulation i du robot serpent sous-marin (100) suive un signal de référence sinusoïdal défini par

$$\phi_i^*(t) = \alpha g(i,n)\sin(\omega t + (i-1)\delta) + \gamma,$$

où $\alpha$ et $\omega$ sont l'amplitude maximale et la fréquence, respectivement, $\delta$ détermine le changement de phase entre les articulations, tandis que la fonction g *(i, n)* est une fonction de mise à l'échelle pour l'amplitude de l'articulation i.

5. Procédé selon une quelconque revendication précédente, dans lequel l'étape consistant à calculer une orientation souhaitée pour le robot (100) fait utilisation d'une loi d'orientation en ligne de mire intégrale.

6. Procédé selon une quelconque revendication précédente, dans lequel l'orientation souhaitée est donnée par une loi d'orientation en ligne de mire utilisant une distance vers l'avant $\Delta$ et l'orientation souhaitée correspond à l'orientation du robot (100) lorsqu'il se rend vers le point qui se trouve à une distance $\Delta$ en avant du robot le long d'un déplacement parallèle de la trajectoire souhaitée (102).

7. Procédé selon la revendication 6, dans lequel la taille du déplacement parallèle est donnée par l'ampleur de l'écart par rapport à la trajectoire souhaitée (102) dans le temps de sorte que l'orientation souhaitée pour le robot (100) est calculée en fonction d'une intégrale de temps d'une fonction de la distance jusqu'à la trajectoire.

8. Procédé selon la revendication 6 ou 7, dans lequel la distance vers l'avant $\Delta$ est définie comme au moins la longueur du robot.

9. Procédé selon la revendication 6, 7 ou 8, dans lequel l'orientation du robot (100) est déterminée en utilisant une loi d'orientation en ligne de mire intégrale définie par :

$$\bar{\theta}_{\text{ref}} = -\arctan\left(\frac{p_y + \sigma y_{int}}{\Delta}\right), \qquad \Delta > 0$$

$$\dot{y}_{int} = \frac{\Delta p_y}{(p_y + \sigma y_{int})^2 + \Delta^2}$$

où $p_y$ est l'erreur due à l'intermodulation tandis que $\Delta$ et $\sigma > 0$ sont tous deux des paramètres de conception constants et $y_{int}$ illustre l'action intégrale de la loi d'orientation, avec $\Delta$ désignant une distance vers l'avant.

10. Dispositif de commande pour guider un robot serpent sous-marin (100), le robot serpent comprenant une structure allongée souple capable de se courber à deux articulations ou plus le long de sa longueur afin de générer un mouvement ondulant pour se propulser ainsi dans l'eau et le robot serpent présentant une longueur qui fait au moins dix fois sa largeur maximale, le dispositif de commande étant agencé pour :

déterminer une trajectoire souhaitée (102) pour le robot, la trajectoire souhaitée s'étendant entre un emplacement actuel du robot et un point de destination ;
pendant le mouvement vers l'avant du robot, lorsque le robot s'écarte de la trajectoire souhaitée, déterminer une ampleur de l'écart par rapport à la trajectoire souhaitée ;
calculer une orientation longitudinale souhaitée du robot en tant que fonction de l'ampleur de l'écart par rapport à la trajectoire souhaitée, l'orientation longitudinale souhaitée stable n'étant pas parallèle à la trajectoire souhaitée lorsque le robot est soumis à des forces de dérive telles que des courants océaniques ;
commander le robot de sorte que son orientation longitudinale soit alignée avec l'orientation longitudinale souhaitée, et l'orientation longitudinale du robot n'est pas parallèle à la trajectoire désirée ; et
répéter les étapes de calcul et de commande et/ou utiliser une boucle de rétroaction afin de fournir une réévaluation constante de l'écart et un recalcul de la trajectoire souhaitée, de sorte que l'orientation longitudinale du robot oscille autour d'une valeur constante stable qui n'est pas parallèle à la trajectoire souhaitée.

**11.** Dispositif de commande selon la revendication 10, dans lequel le dispositif de commande est agencé pour exécuter le procédé selon l'une quelconque des revendications 1 à 9.

**12.** Robot serpent sous-marin (100) avec un dispositif de commande selon la revendication 10 ou 11.

**13.** Produit de programme informatique comprenant des instructions qui, lorsqu'elles sont exécutées, configureront un dispositif de commande pour un robot serpent (100) pour commander le robot serpent conformément au procédé selon l'une quelconque des revendications 1 à 9.

Fig. 1(a)

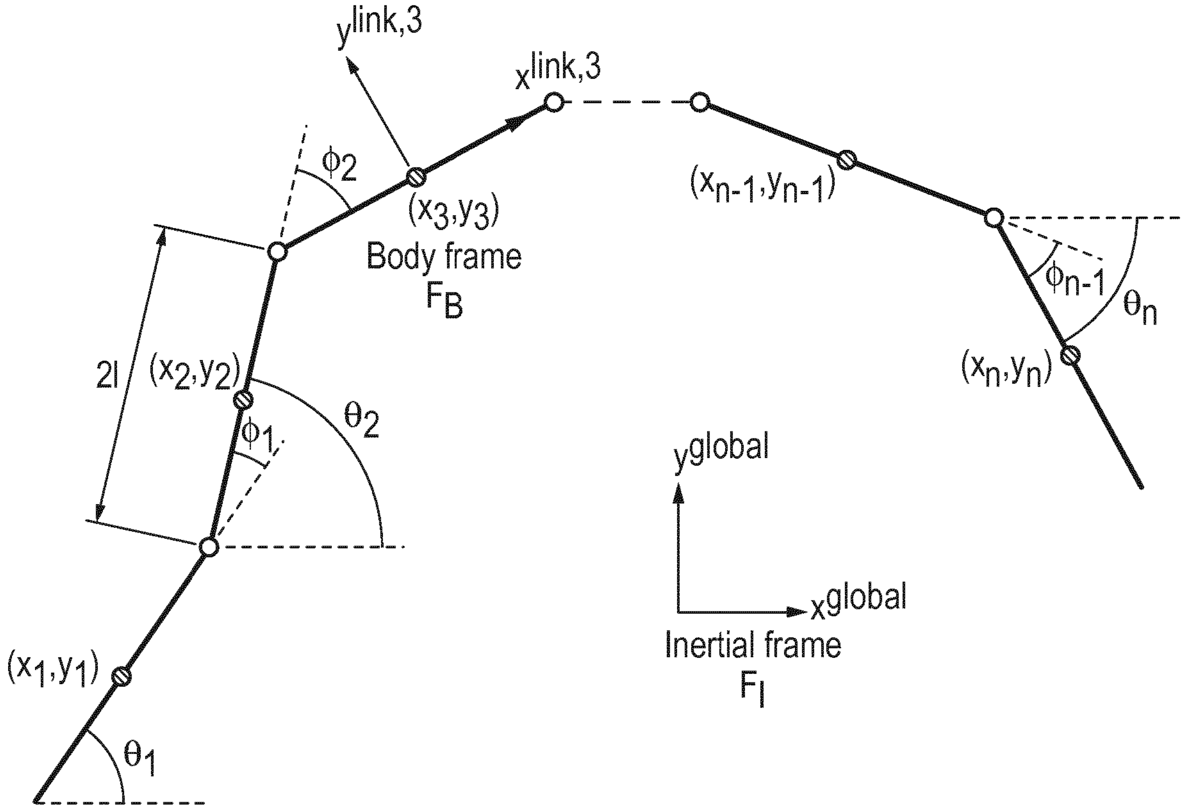
$y^{link,3}$
$x^{link,3}$
$\phi_2$
$(x_3,y_3)$
Body frame
$F_B$
$(x_{n-1},y_{n-1})$
$\phi_{n-1}$
$\theta_n$
$(x_n,y_n)$
2l
$(x_2,y_2)$
$\theta_2$
$\phi_1$
$y^{global}$
$x^{global}$
Inertial frame
$F_I$
$(x_1,y_1)$
$\theta_1$

Fig. 1(b)

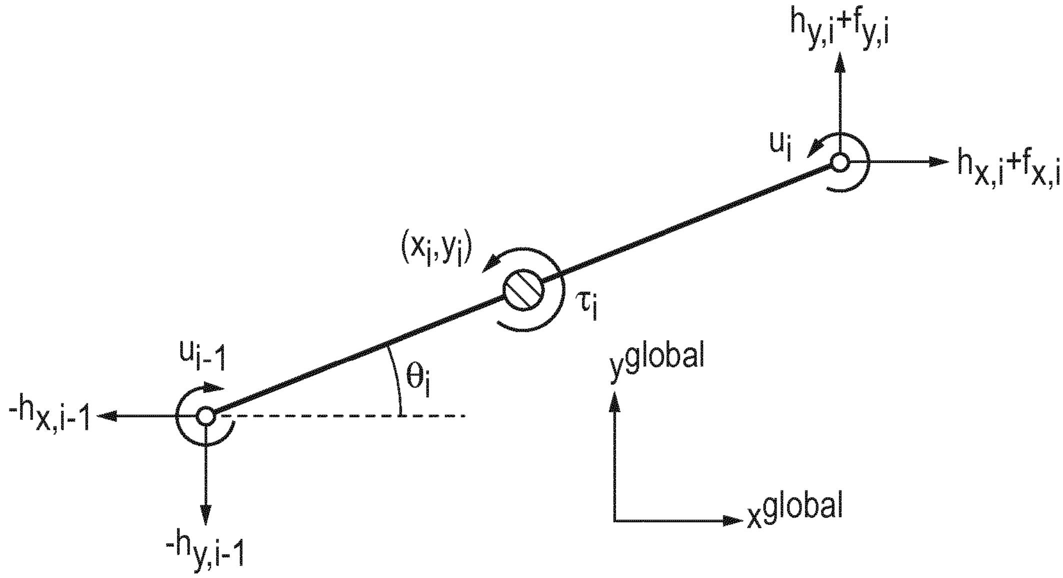
$h_{y,i}+f_{y,i}$
$u_i$
$h_{x,i}+f_{x,i}$
$(x_i,y_i)$
$\tau_i$
$u_{i-1}$
$\theta_i$
$y^{global}$
$-h_{x,i-1}$
$-h_{y,i-1}$
$x^{global}$

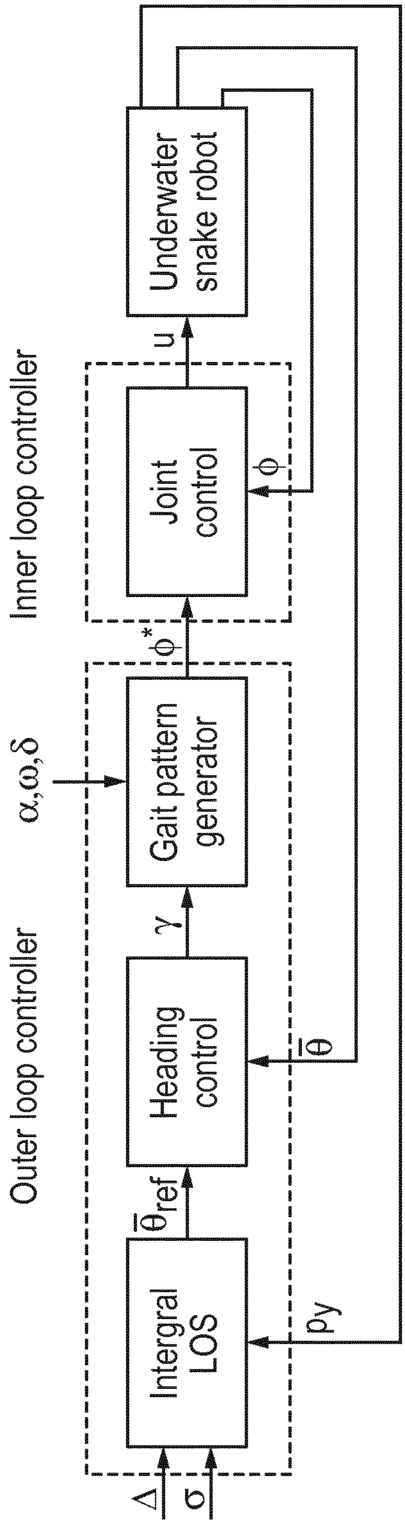
Outer loop controller
Inner loop controller
Δ
σ
Intergral LOS
$\bar{\theta}_{ref}$
Heading control
γ
α,ω,δ
Gait pattern generator
φ*
Joint control
u
Underwater snake robot
φ
$\bar{\theta}$
py

Fig. 2

Fig. 3(a)

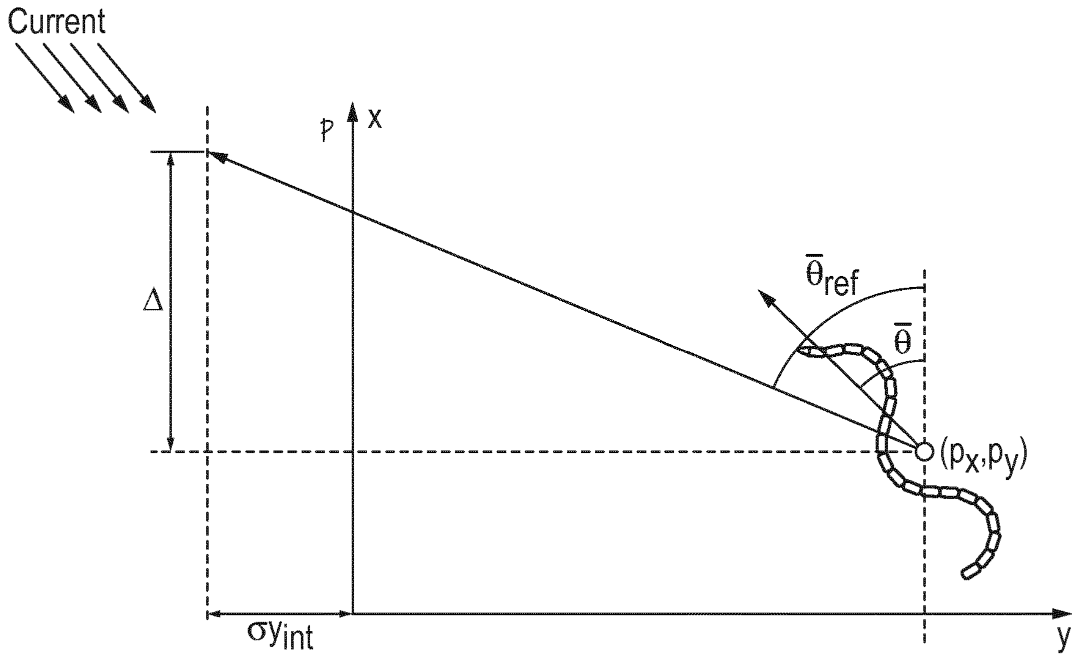
Current
p
x
Δ
θ̄ref
θ̄
(px,py)
σyint
y

Fig. 3(b)

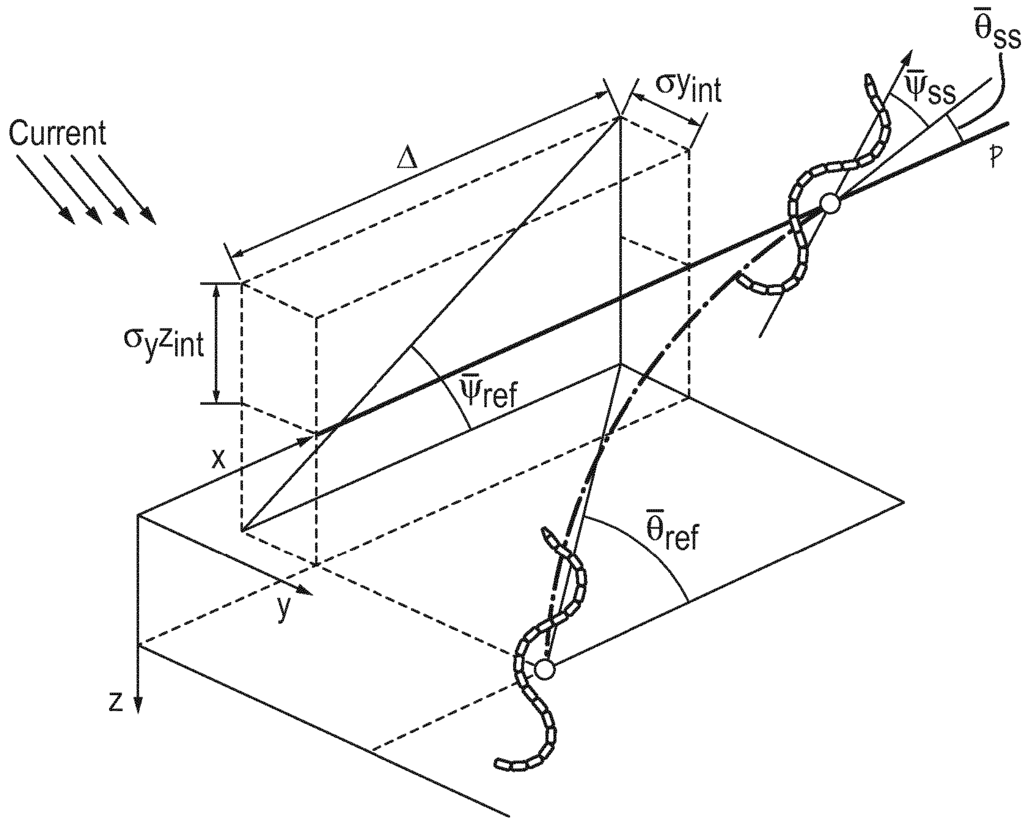
θ̄ss
ψ̄ss
σyint
Current
Δ
p
σyzint
ψ̄ref
x
θ̄ref
y
z

Fig. 4

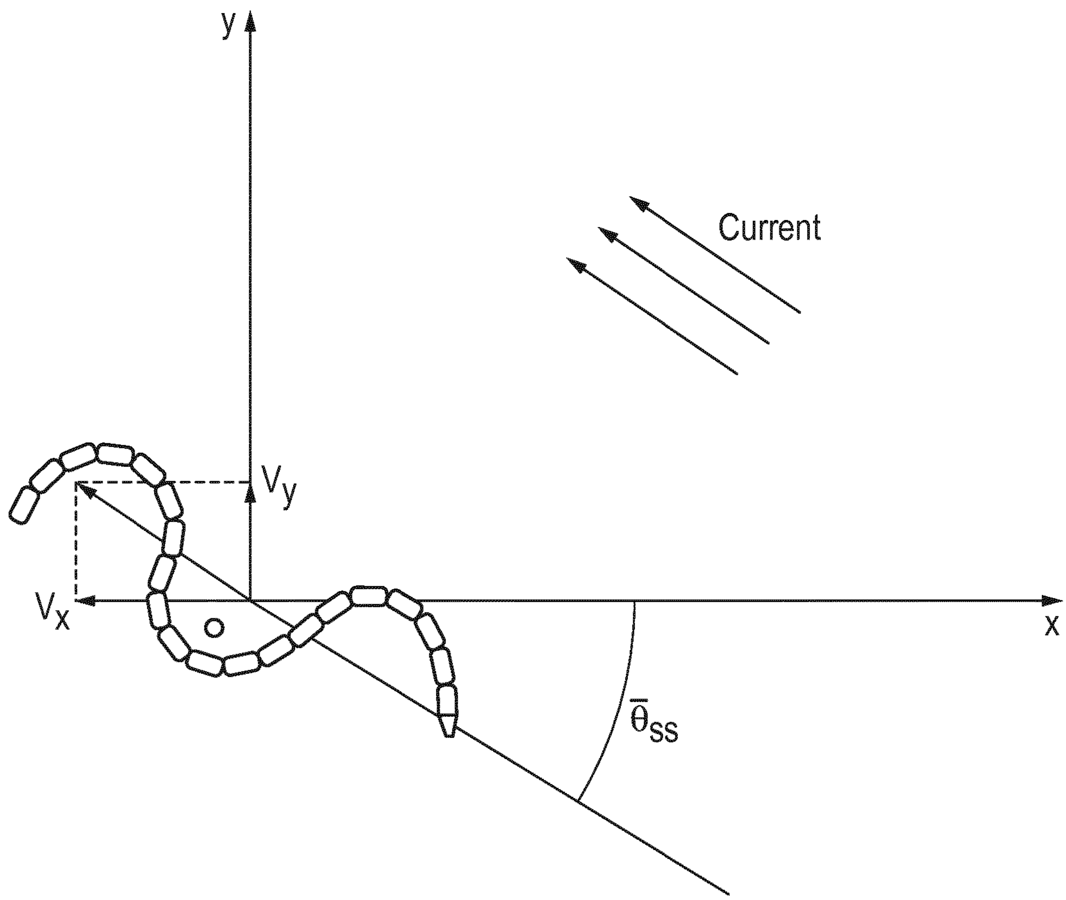

Fig. 5

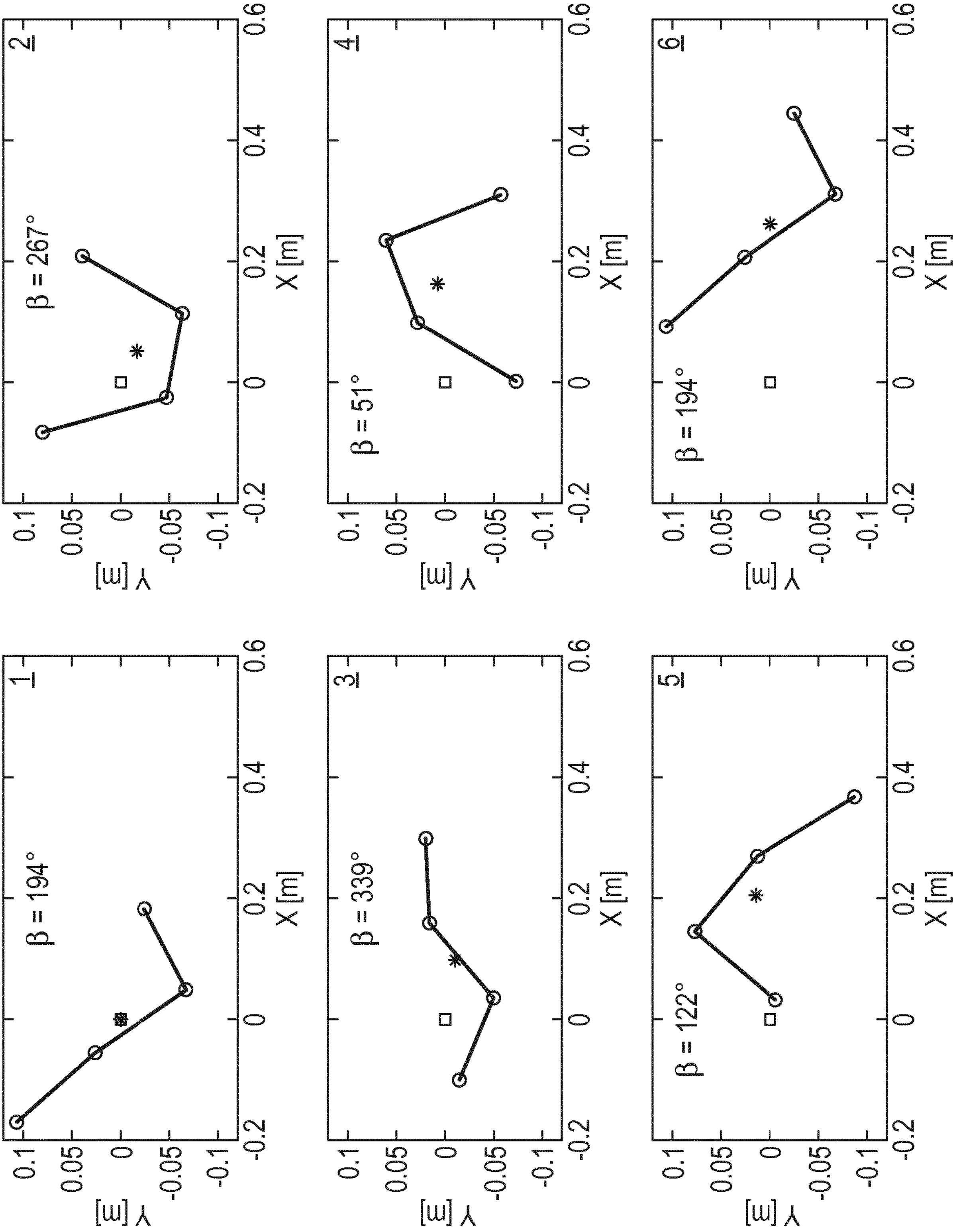

1
β = 194°
2
β = 267°
3
β = 339°
4
β = 51°
5
β = 122°
6
β = 194°
X [m]
Y [m]
-0.2
0
0.2
0.4
0.6
0.1
0.05
0
-0.05
-0.1

Fig. 6

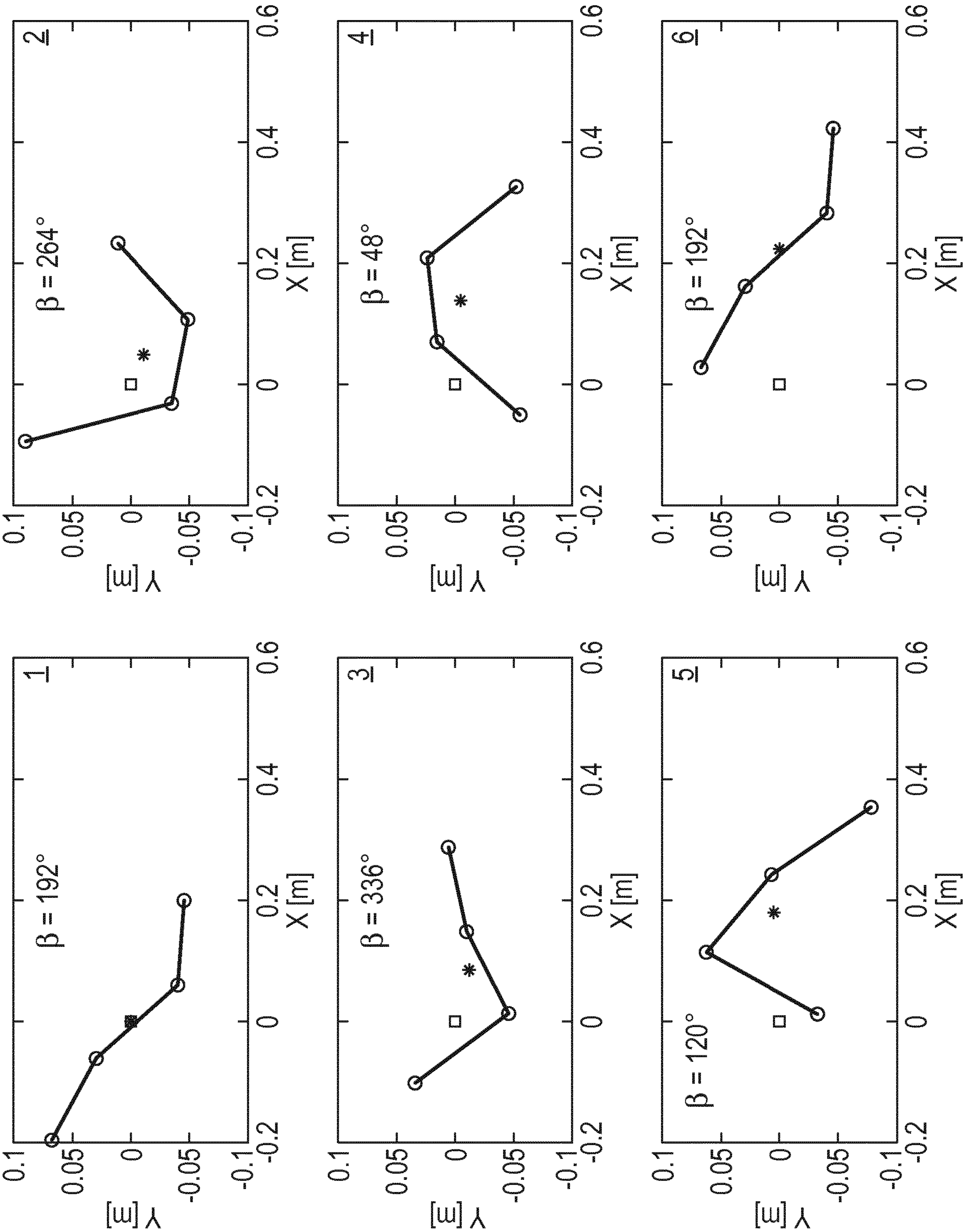

Fig. 7(a)

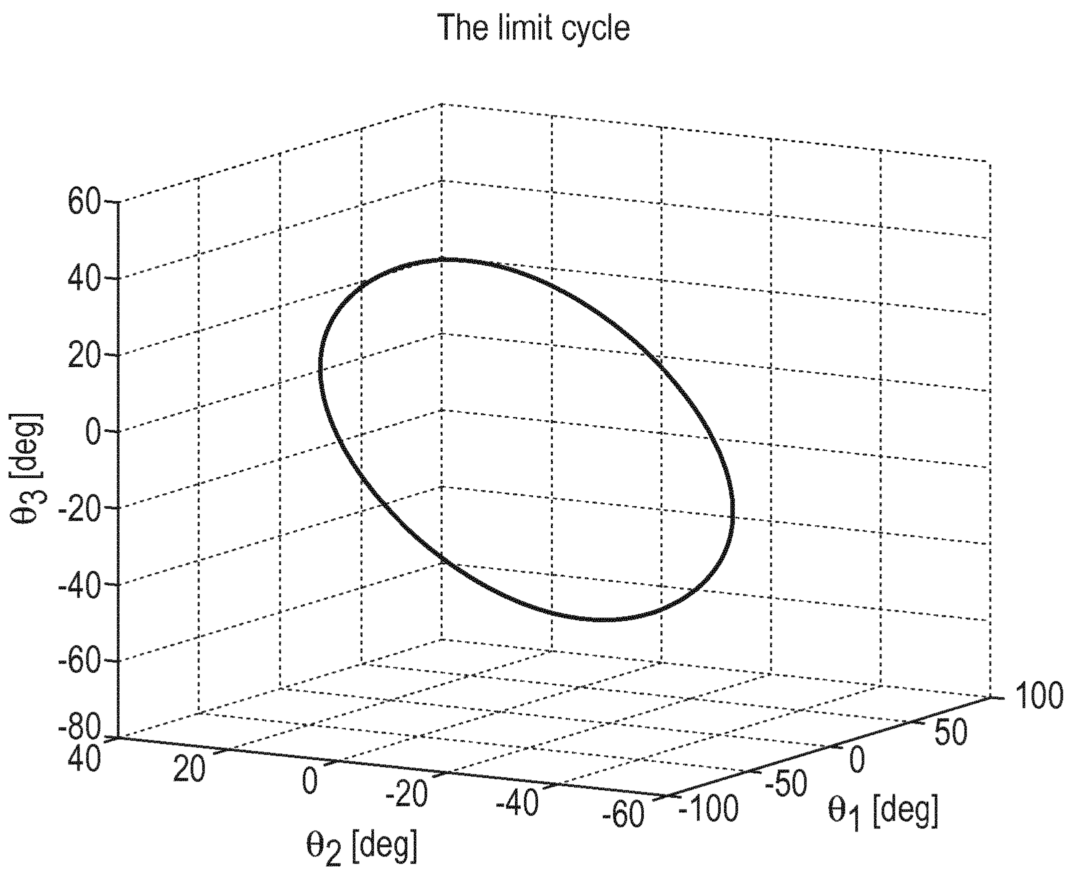
The limit cycle
60
40
20
0
-20
-40
-60
-80
θ3 [deg]
40
20
0
-20
-40
-60
θ2 [deg]
-100
-50
0
50
100
θ1 [deg]

Fig. 7(b)

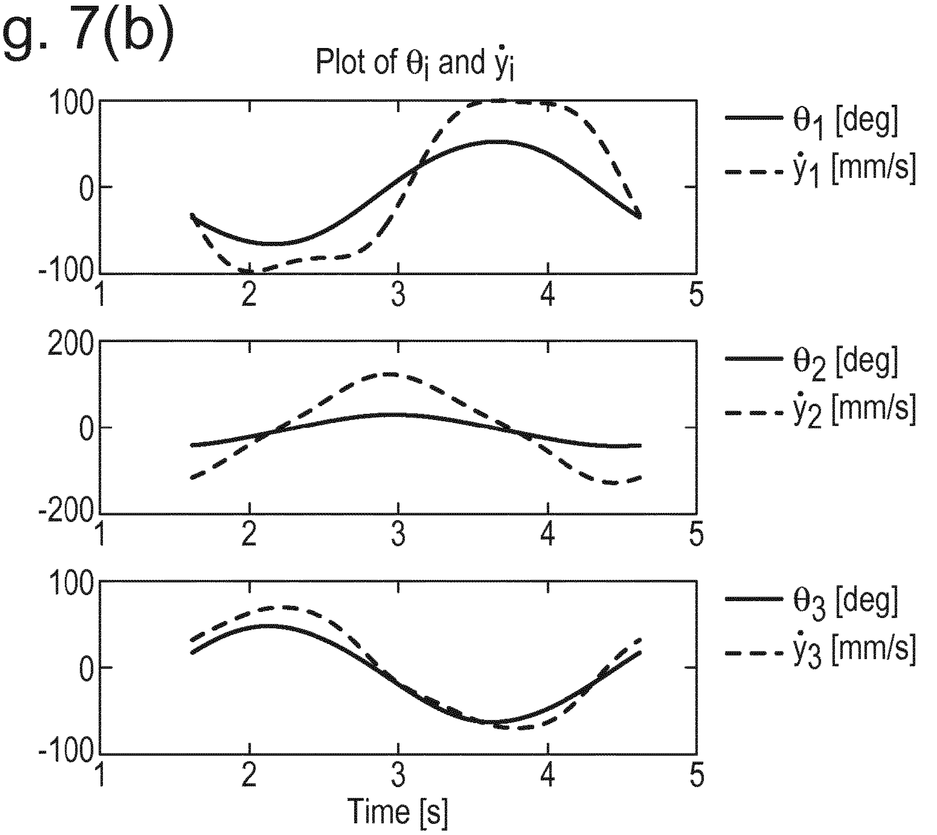

Plot of θi and ẏi
θ1 [deg]
ẏ1 [mm/s]
θ2 [deg]
ẏ2 [mm/s]
θ3 [deg]
ẏ3 [mm/s]
100
0
-100
200
0
-200
100
0
-100
1 2 3 4 5
Time [s]


Fig. 7(c)

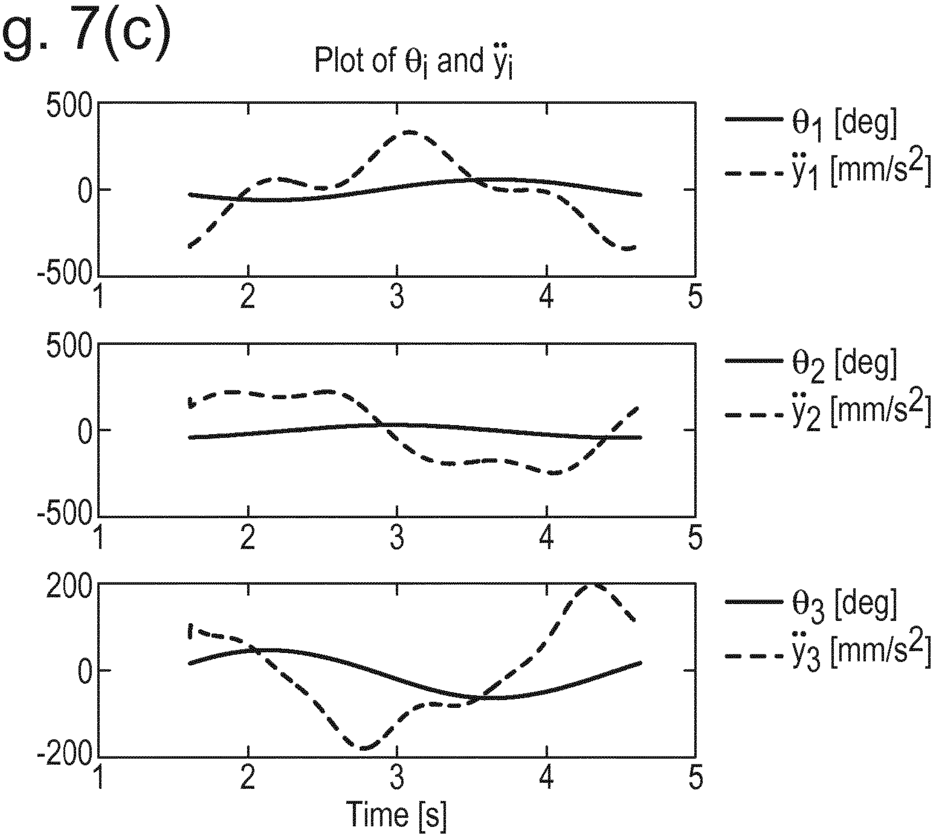

Plot of θi and ÿi
θ1 [deg]
ÿ1 [mm/s2]
θ2 [deg]
ÿ2 [mm/s2]
θ3 [deg]
ÿ3 [mm/s2]
500
0
-500
500
0
-500
200
0
-200
1 2 3 4 5
Time [s]

# Fig. 8(a)

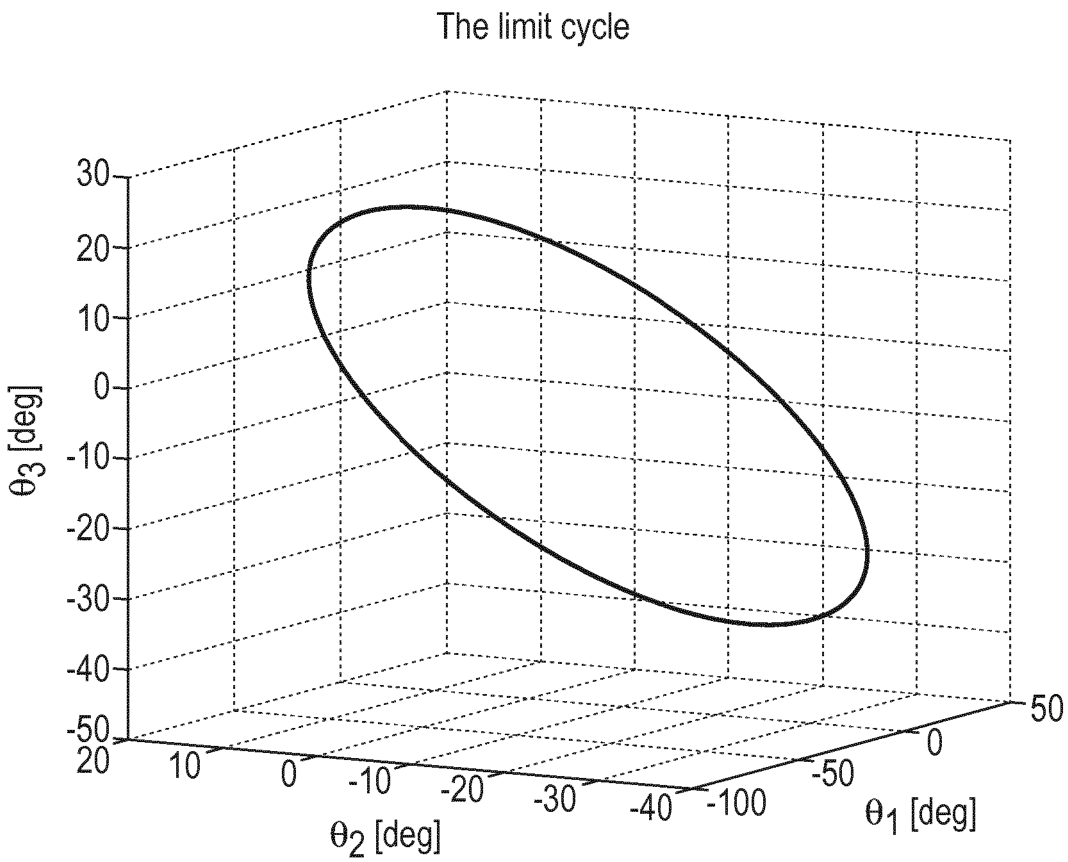
The limit cycle
30
20
10
0
-10
-20
-30
-40
-50
θ3 [deg]
20
10
0
-10
-20
-30
-40
θ2 [deg]
-100
-50
0
50
θ1 [deg]

Fig. 8(b)

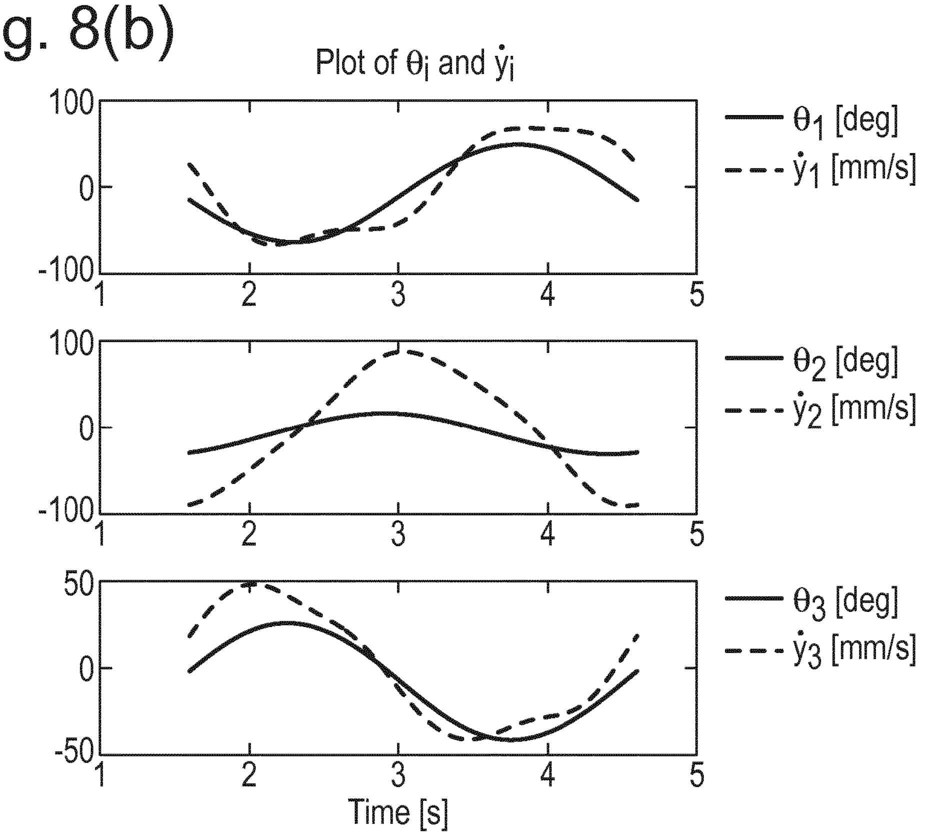
Plot of $\theta_i$ and $\dot{y}_i$
$\theta_1$ [deg]
$\dot{y}_1$ [mm/s]
$\theta_2$ [deg]
$\dot{y}_2$ [mm/s]
$\theta_3$ [deg]
$\dot{y}_3$ [mm/s]
Time [s]

Fig. 8(c)

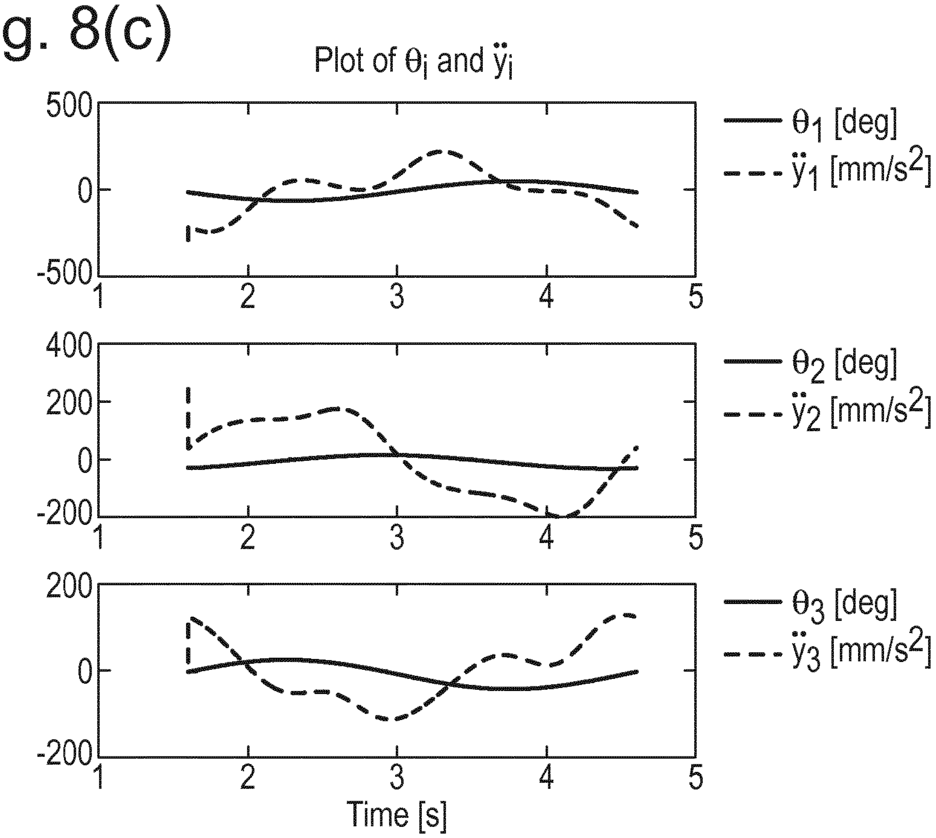
Plot of $\theta_i$ and $\ddot{y}_i$
$\theta_1$ [deg]
$\ddot{y}_1$ [mm/s$^2$]
$\theta_2$ [deg]
$\ddot{y}_2$ [mm/s$^2$]
$\theta_3$ [deg]
$\ddot{y}_3$ [mm/s$^2$]
Time [s]

Fig. 9(a)

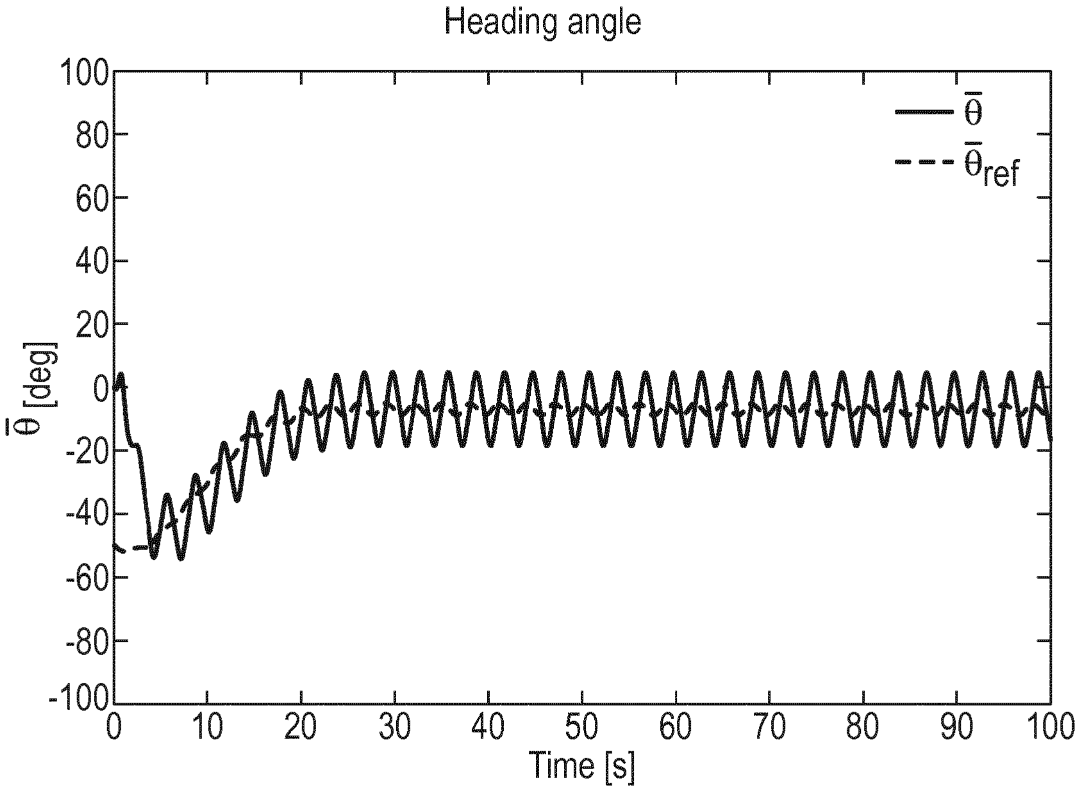
Heading angle
$\bar{\theta}$
$\bar{\theta}_{ref}$
$\bar{\theta}$ [deg]
100
80
60
40
20
0
-20
-40
-60
-80
-100
0
10
20
30
40
50
60
70
80
90
100
Time [s]

Fig. 9(b)

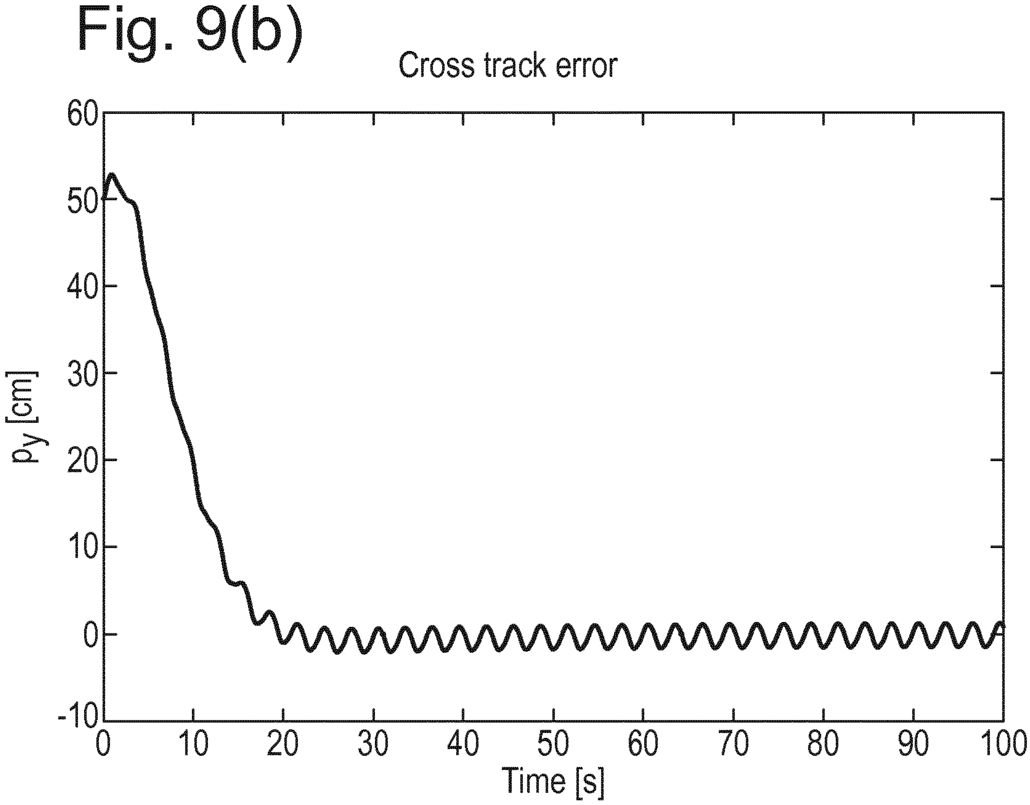
Cross track error
60
50
40
30
20
10
0
-10
0
10
20
30
40
50
60
70
80
90
100
Time [s]
p_y [cm]

Fig. 9(c)

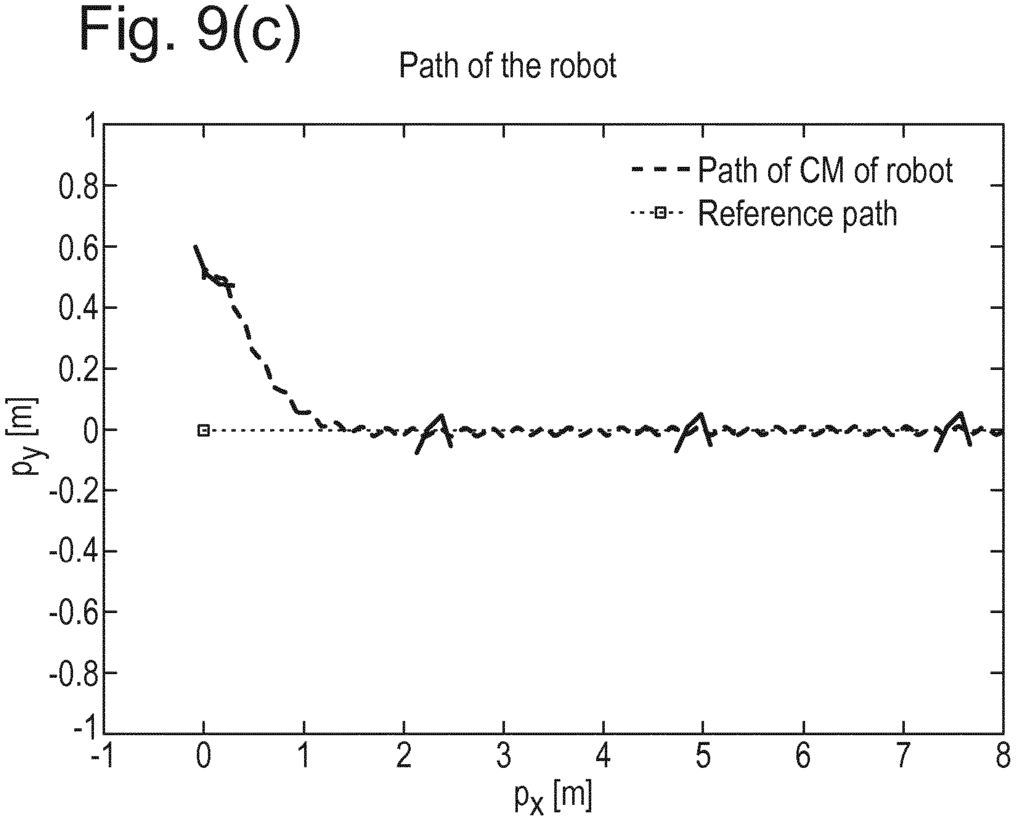
Path of the robot
Path of CM of robot
Reference path
1
0.8
0.6
0.4
0.2
0
-0.2
-0.4
-0.6
-0.8
-1
-1
0
1
2
3
4
5
6
7
8
p_x [m]
p_y [m]

Fig. 10(a)

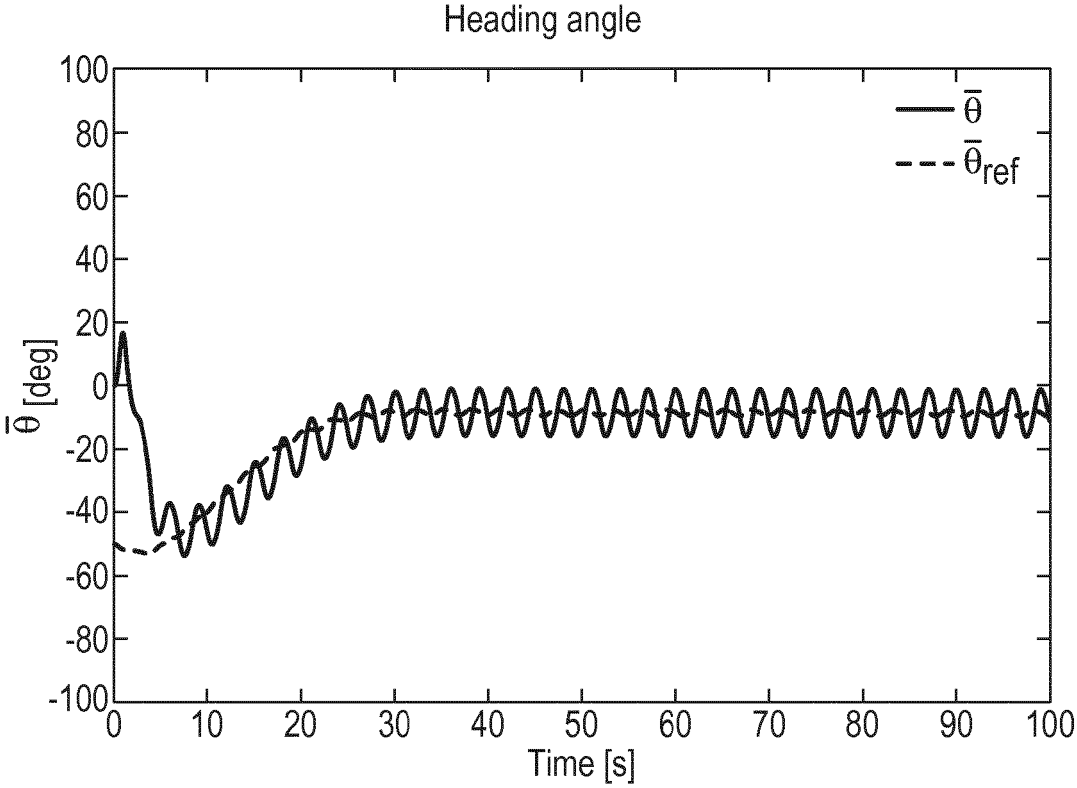
Heading angle
100
80
60
40
20
0
-20
-40
-60
-80
-100
$\bar{\theta}$ [deg]
0
10
20
30
40
50
60
70
80
90
100
Time [s]
$\bar{\theta}$
$\bar{\theta}_{ref}$

Fig. 10(b)

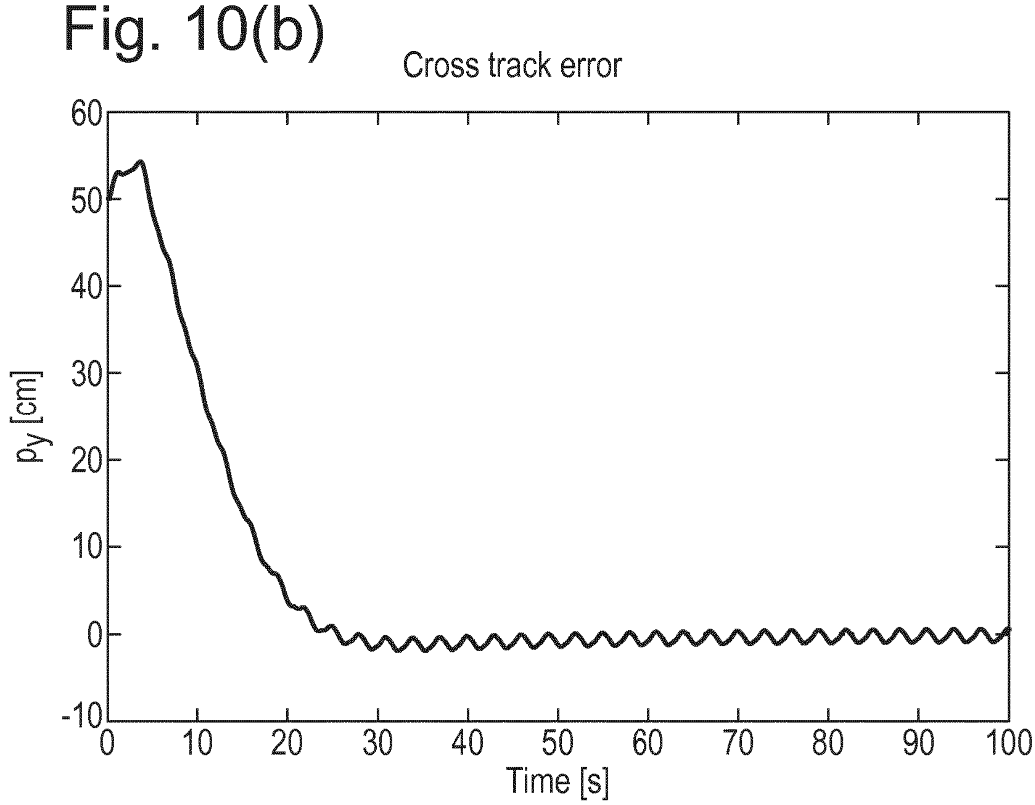


Fig. 10(c)

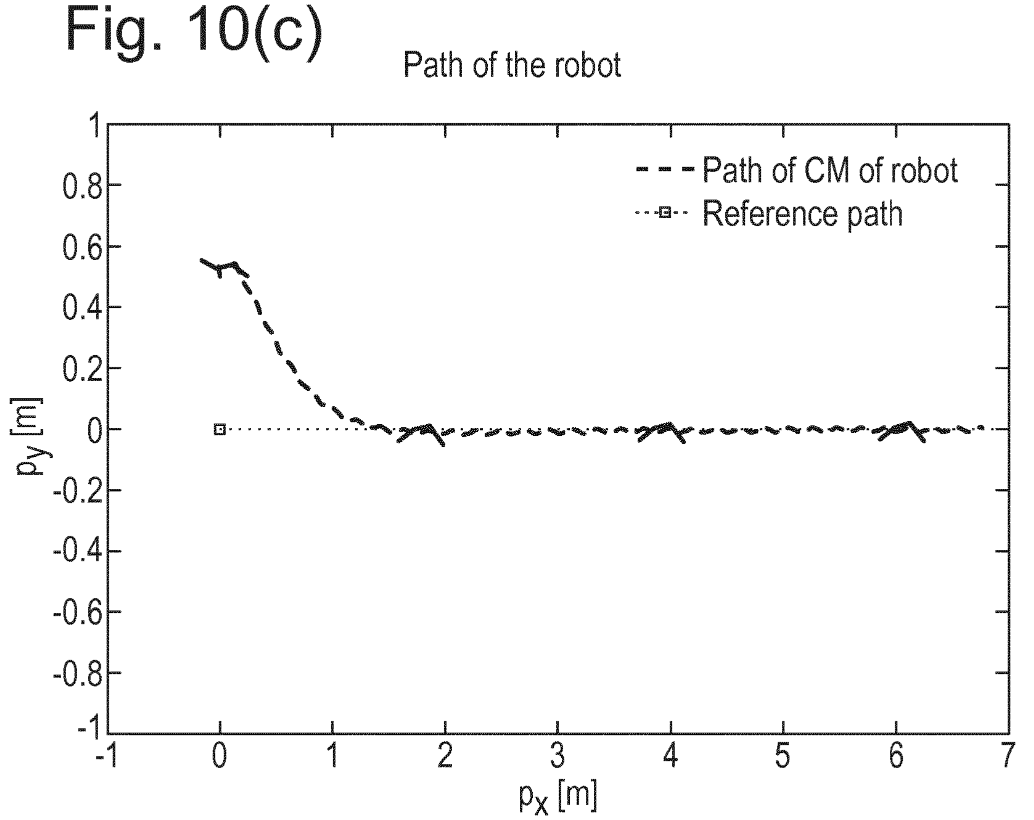

Fig. 11(a)

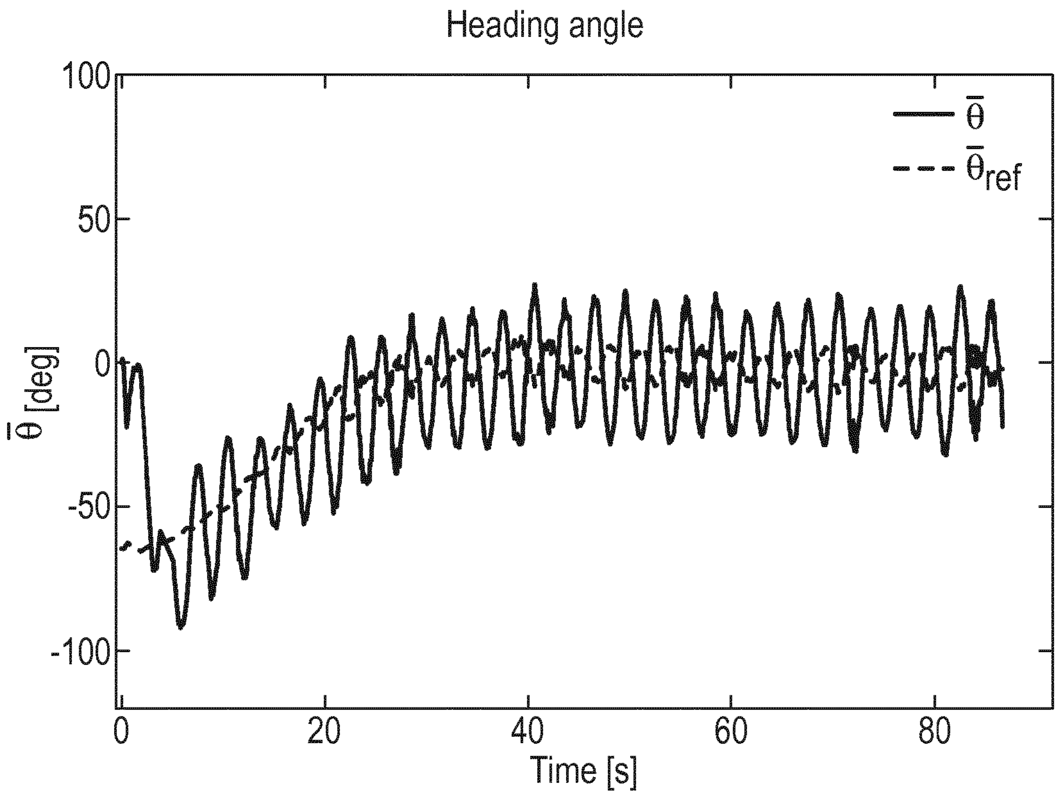
Heading angle
100
50
0
-50
-100
$\bar{\theta}$ [deg]
0
20
40
60
80
Time [s]
$\bar{\theta}$
$\bar{\theta}_{ref}$

Fig. 11(b)

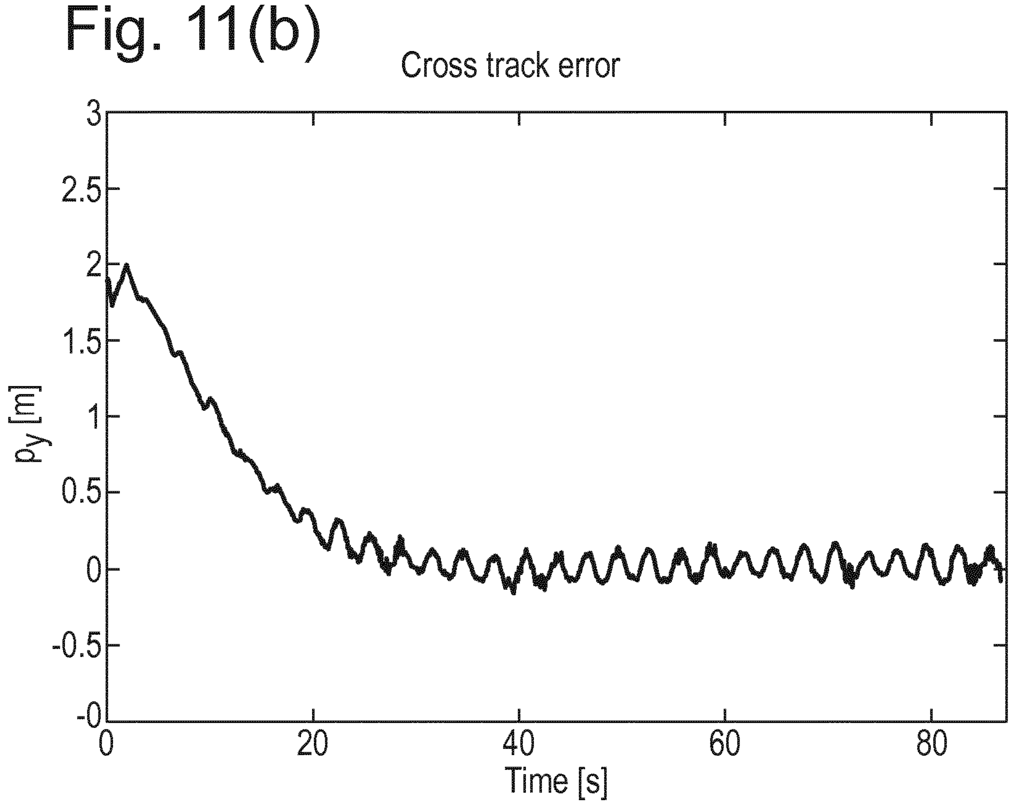


Fig. 11(c)

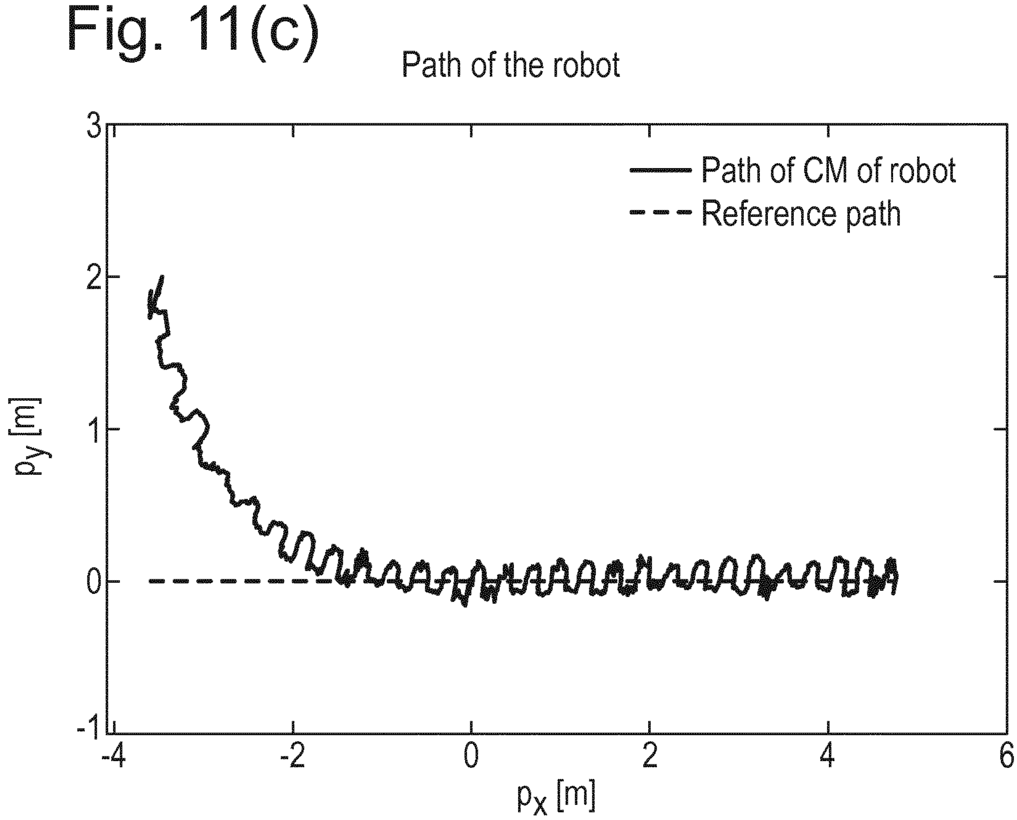

# Fig. 12(a)

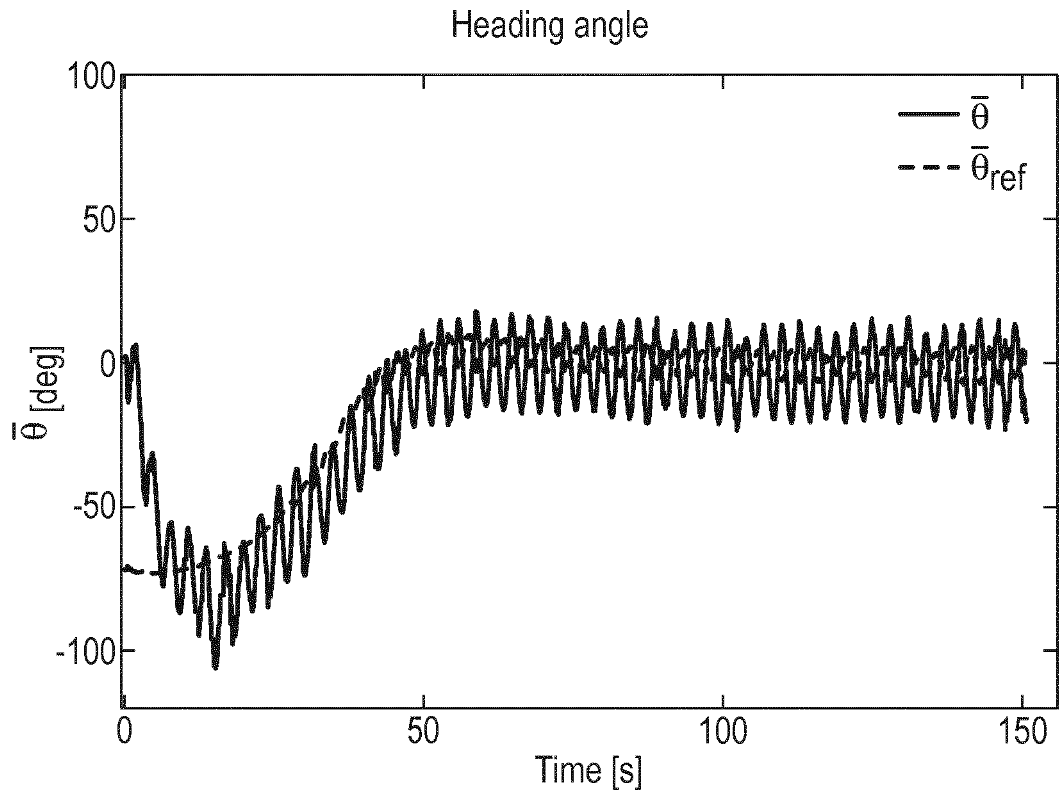
Heading angle
100
50
0
-50
-100
$\bar{\theta}$ [deg]
0
50
100
150
Time [s]
$\bar{\theta}$
$\bar{\theta}_{ref}$

Fig. 12(b)

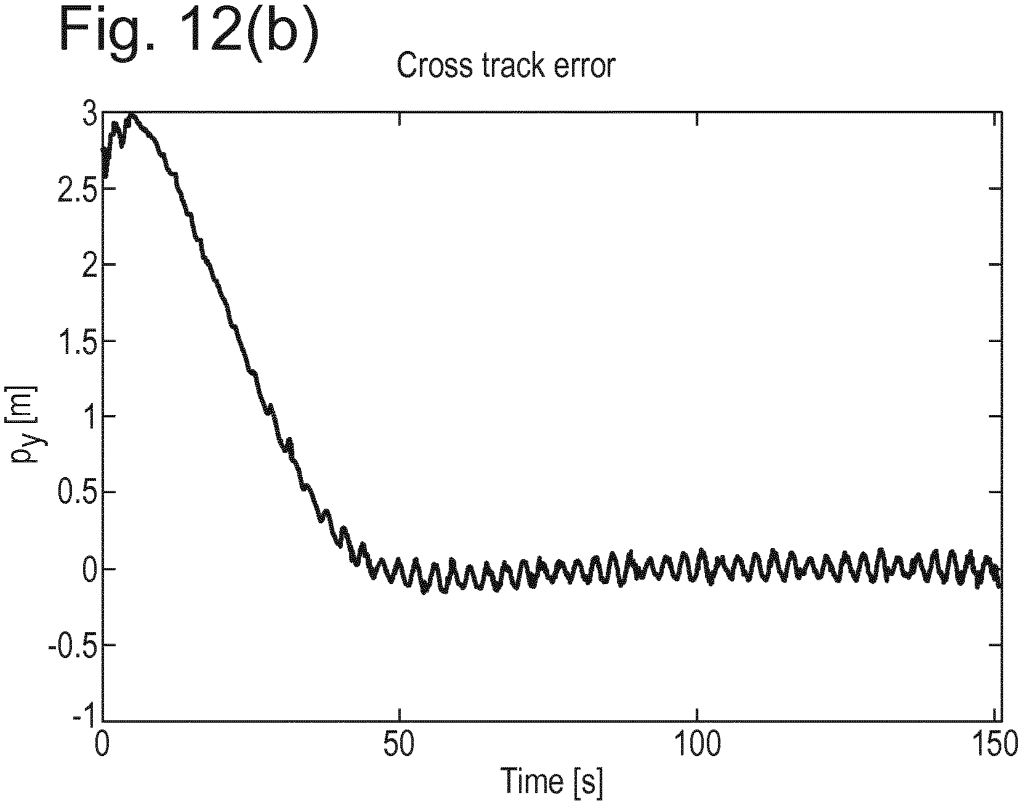


Fig. 12(c)

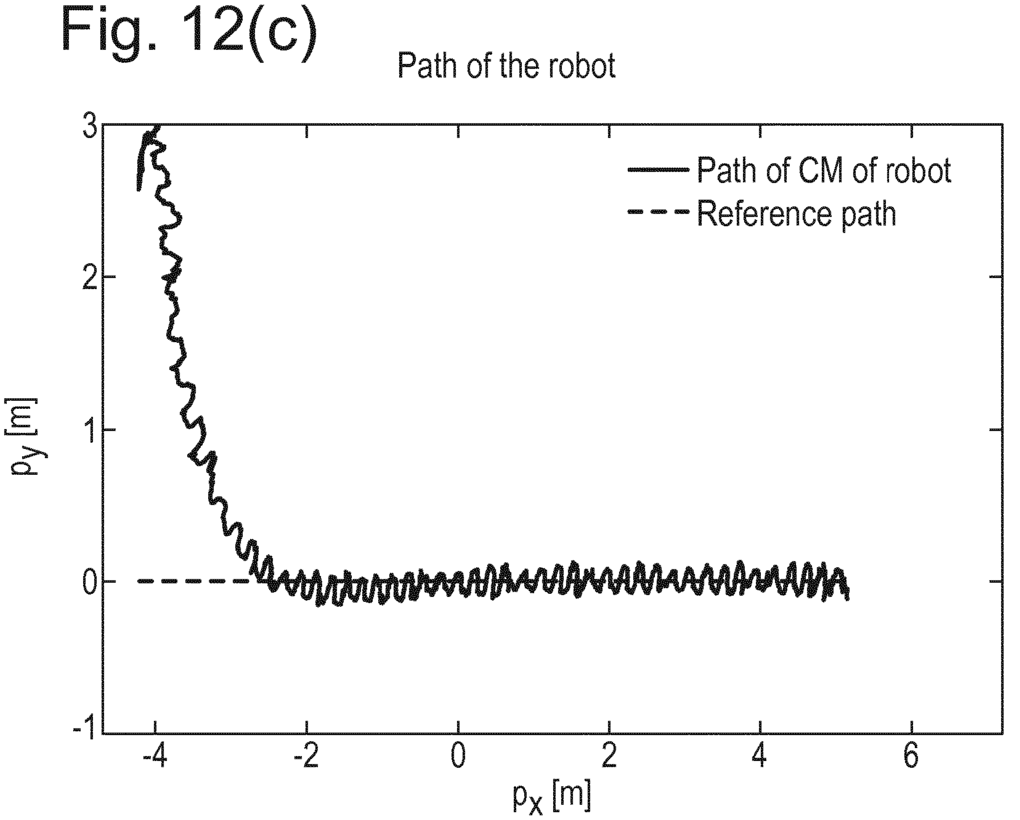

Fig. 13

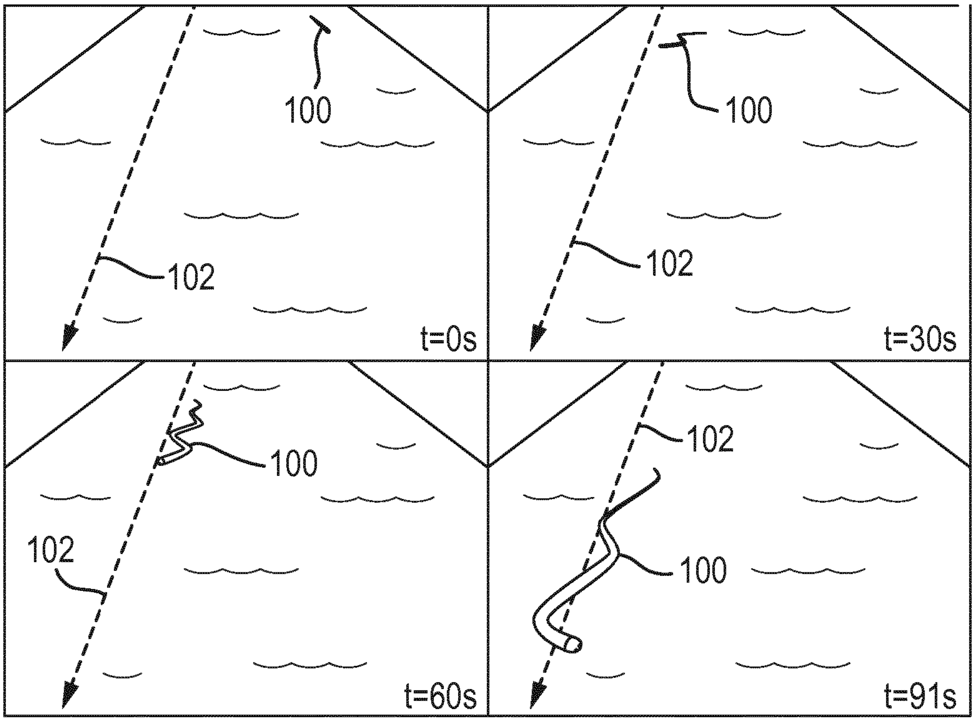
100
102
t=0s
100
102
t=30s
100
102
t=60s
102
100
t=91s

Fig. 14

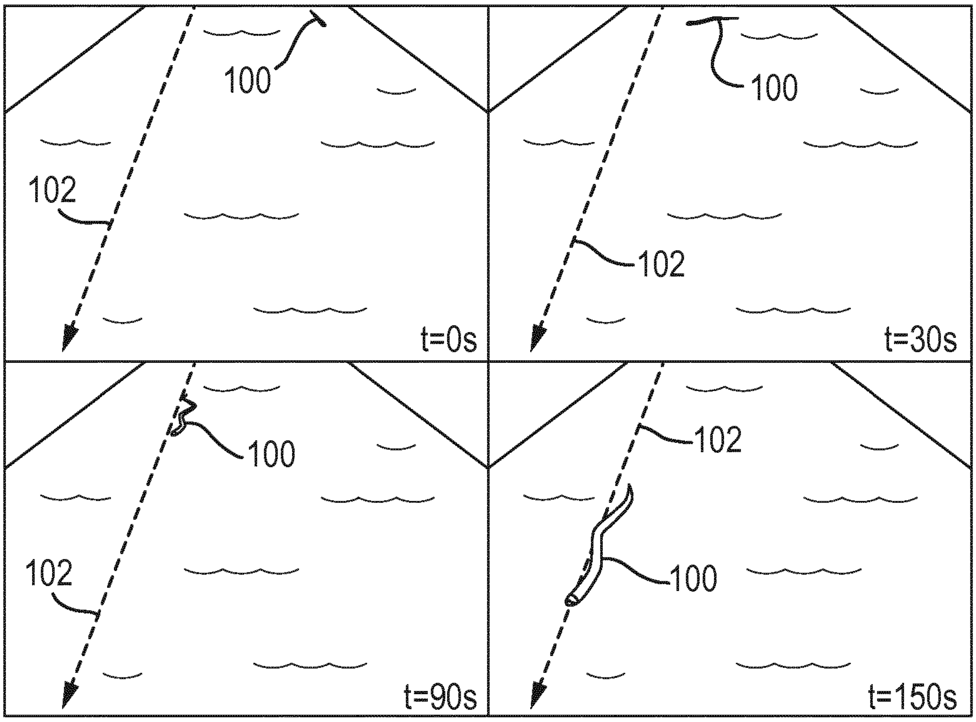
100
102
t=0s
100
102
t=30s
100
102
t=90s
102
100
t=150s

Fig. 15(a)

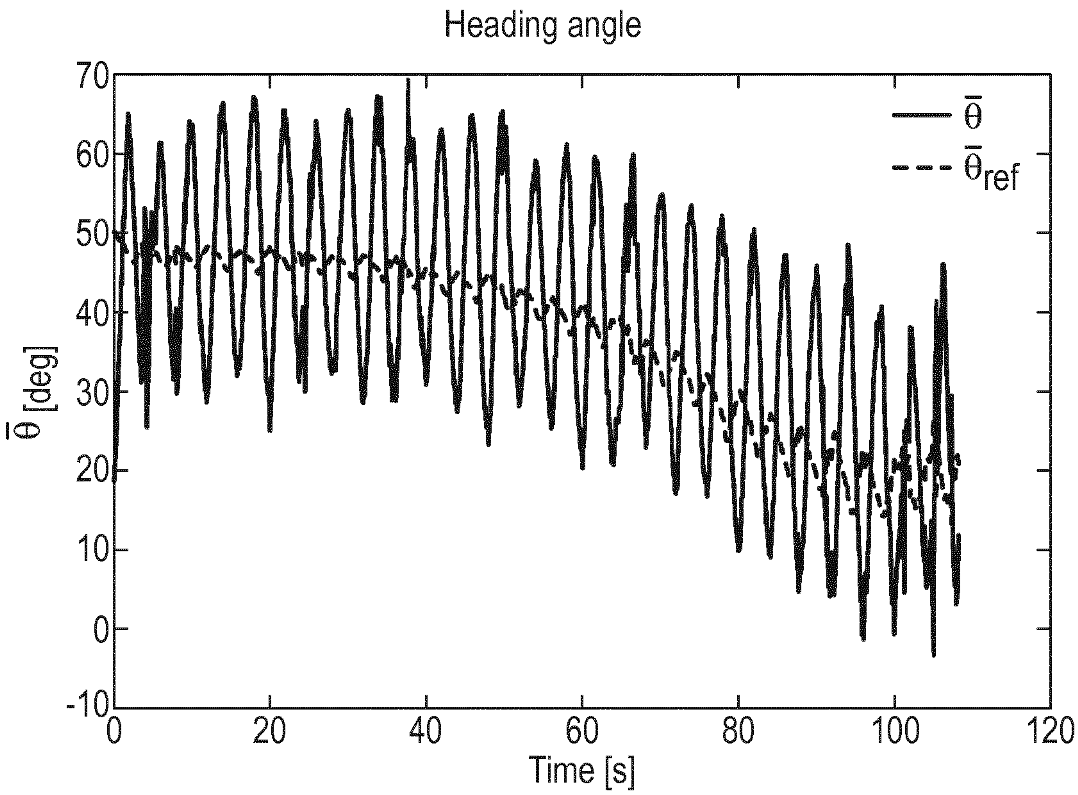
Heading angle
70
60
50
40
30
20
10
0
-10
$\bar{\theta}$ [deg]
0
20
40
60
80
100
120
Time [s]
$\bar{\theta}$
$\bar{\theta}_{ref}$

Fig. 15(b)

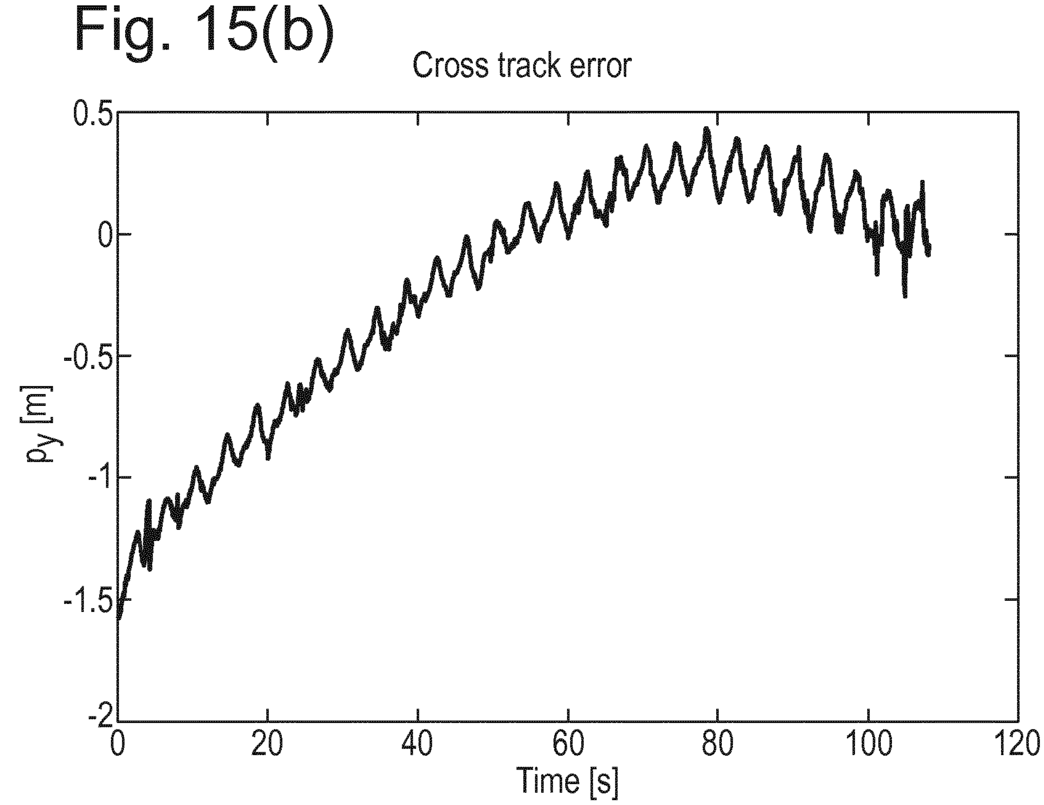


Fig. 15(c)

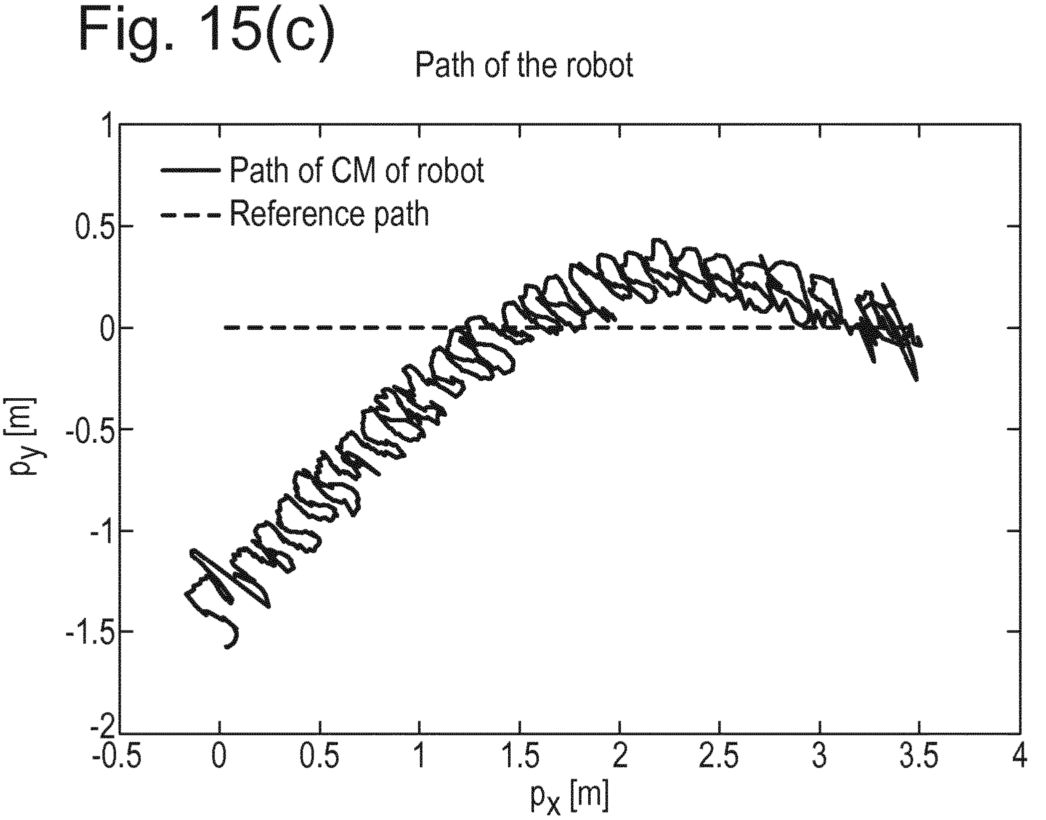

Fig. 16(a)

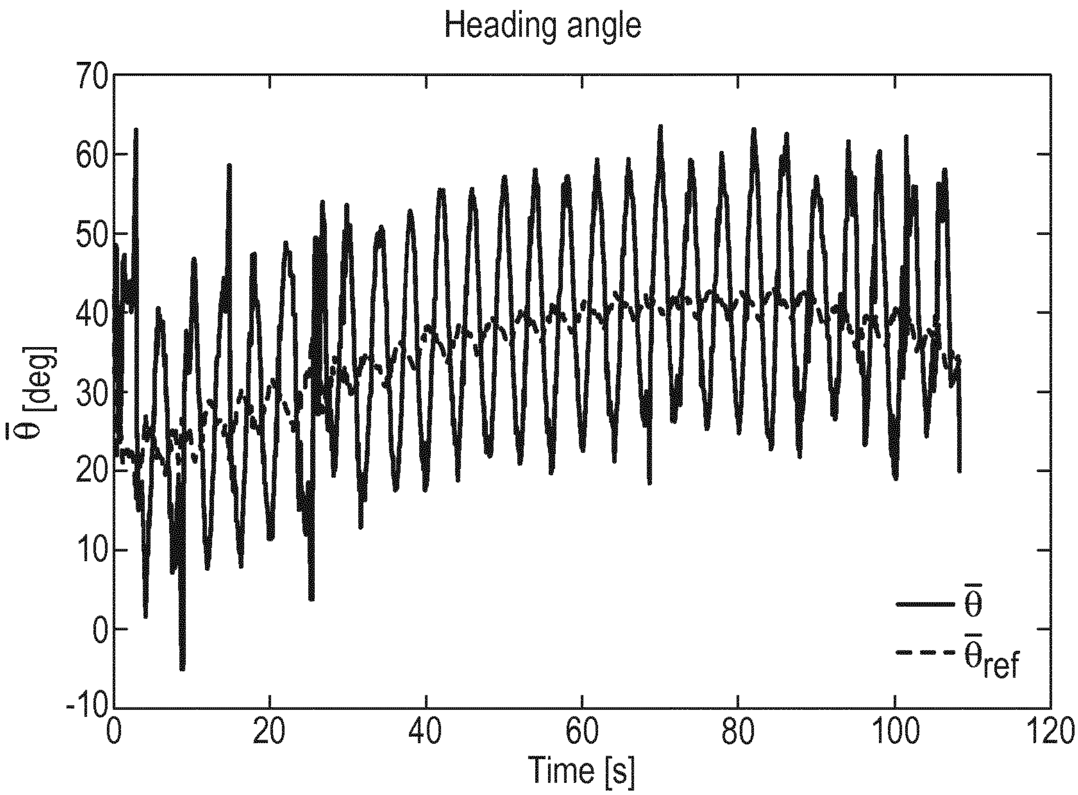
Heading angle
70
60
50
40
30
20
10
0
-10
0
20
40
60
80
100
120
Time [s]
θ̄ [deg]
θ̄
θ̄ref

Fig. 16(b)

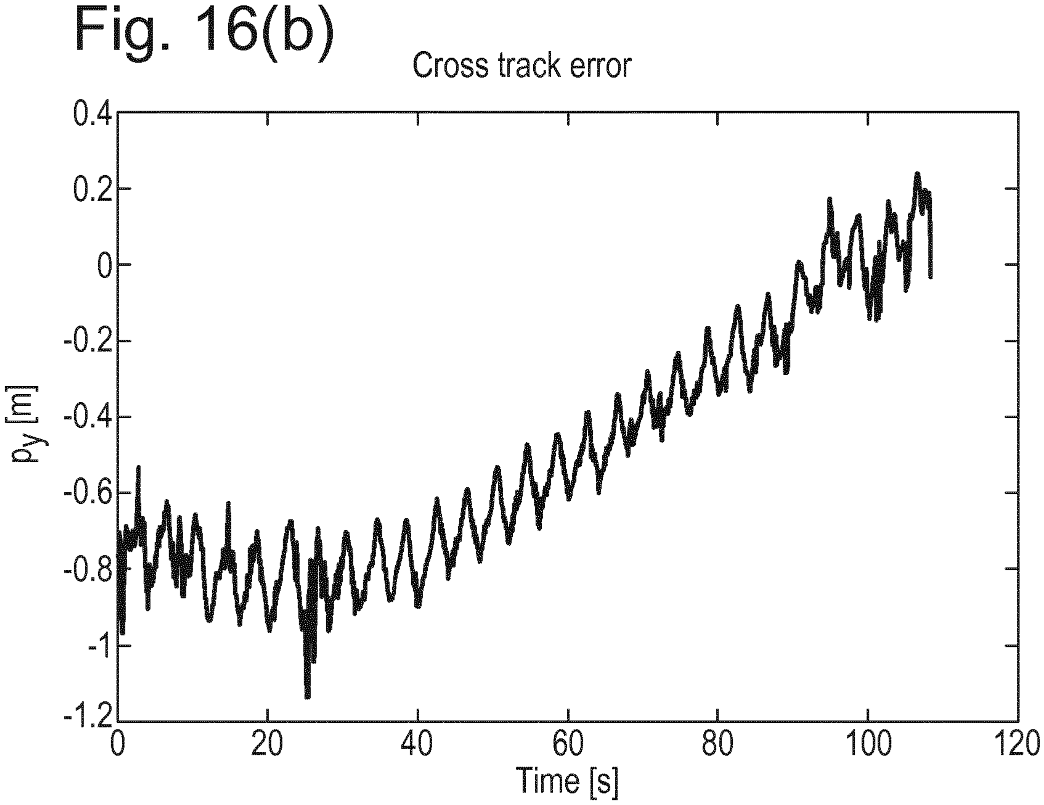


Fig. 16(c)

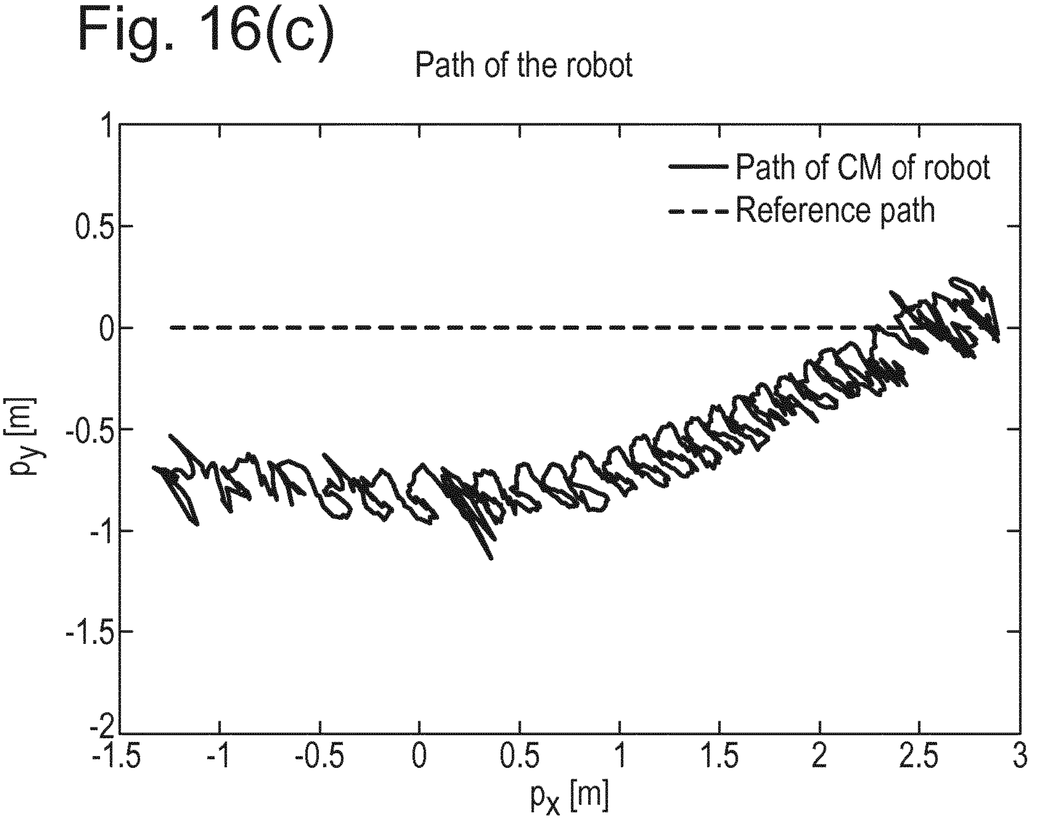

Fig. 17

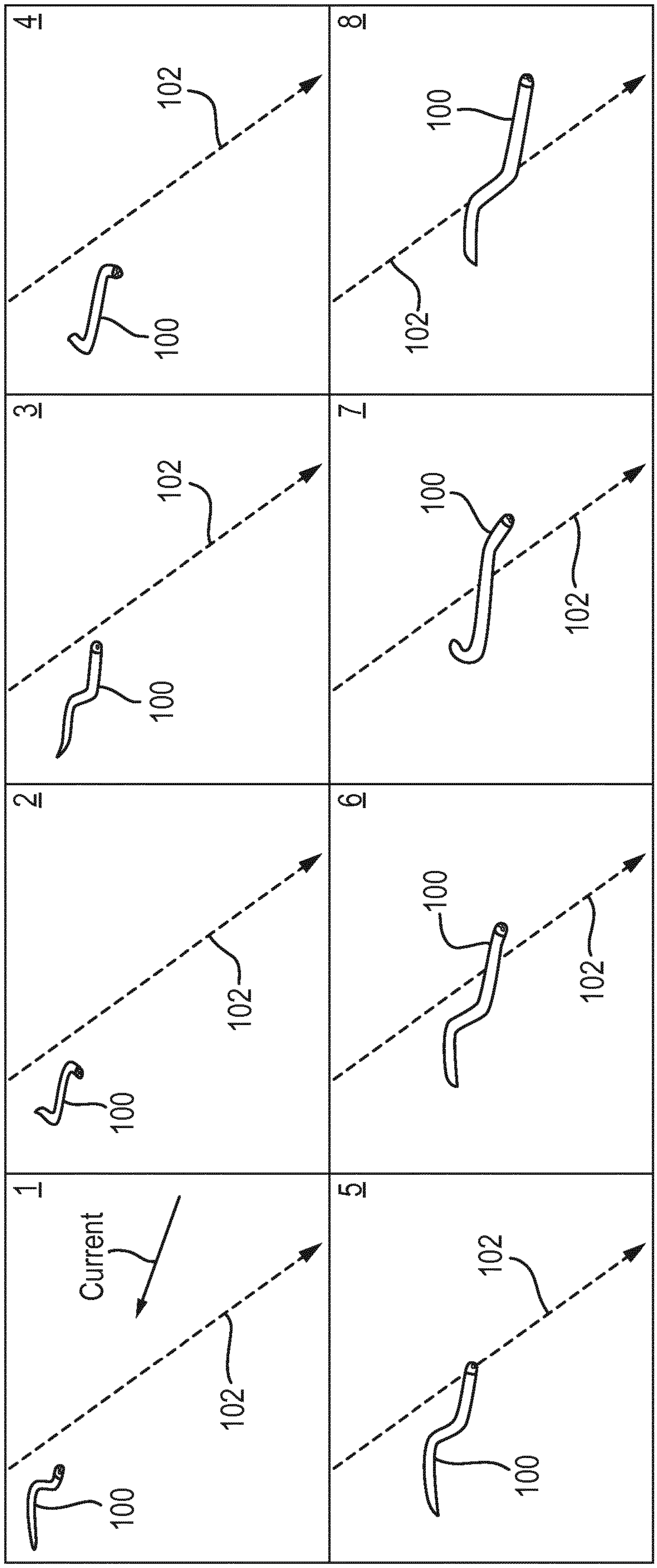
1
Current
100
102
2
100
102
3
100
102
4
100
102
5
100
102
6
100
102
7
100
102
8
100
102

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **E. KELASIDI ; K. Y. PETTERSEN ; J. T. GRAVDAHL ; P. LILJEBACK.** Modelling of underwater snake robots. *Proc. IEEE International Conference on Robotics and Automation (ICRA), Hong Kong, China,* 31 May 2014